# EUROPEAN PATENT APPLICATION

(11) **EP 4 152 007 A1**
(43) Date of publication of application: **22.03.2023**
(21) Application number: 21803159.9
(22) Date of filing: 12.04.2021
(51) Int. Cl.: G01N 35/02, G01N 35/04

(54) **ANALYSIS DEVICE, ANALYSIS METHOD AND PROGRAM**

(30) Priority: 12.05.2020 JP 2020083741
(71) Applicant: FURUNO ELECTRIC CO., LTD., Nishinomiya-City, Hyogo 662-8580 (JP)
(72) Inventor: OKAJIMA, Yoshifumi, Nishinomiya-City, Hyogo 662-8580 (JP)
(74) Representative: Müller Hoffmann & Partner
(86) International application number: PCT/JP2021/015134
(87) International publication number: WO 2021/229970

(57) **Abstract**

The present disclosure provides an analyzer with a reduced adverse effect to photometry accompanying acceleration or deceleration of a cuvette table. An actuator 4 drives a cuvette table 3 where a plurality of cuvettes are disposed annularly so that the cuvette table 3 performs intermittent rotation in which a resting state and a rotating state are repeatedly alternated, and each time the cuvette table 3 rotates intermittently, a row of the plurality of cuvettes is displaced in the annular direction by a given number of cuvettes. In the resting state, a pretreatment part 6 performs pretreatment to a cuvette that stands still at a pretreatment position 6p, and a post treatment part 7 performs post treatment to a cuvette that stands still at a post treatment position 7p. In the rotating state, a photometry part 5 performs photometry to a cuvette that passes through a photometric position 5p. A controller 8, in the rotating state until the cuvette that stood still at the pretreatment position 6p stands still at the post treatment position 7p after the completion of the pretreatment, controls the actuator 4 so that the cuvette passes through the photometric position 5p at a fixed rotational speed, each time the cuvette passes through the photometric position 5p.

## Description

### TECHNICAL FIELD

The present disclosure relates to an analyzer, an analyzing method, and a program, which analyze reaction liquid of sample and reagent.

### BACKGROUND ART

Conventionally, analyzers which analyze components in sample by causing the sample and reagent to react are known. In this kind of analyzer, a plurality of cuvettes which accommodate the sample and the reagent are disposed annularly on a cuvette table, and the cuvette table is rotated to let each cuvette pass through a photometric position which is located between a light source and a spectrum detector, which are disposed on both sides of the cuvette. At this time, a quantity of light which is emitted from the light source and transmits the illuminated area on the cuvette is measured (hereinafter, referred to as "the photometry is performed") to analyze the components in the sample. The photometry is performed a plurality of times to the same cuvette, and an analytical value of the component in the sample is calculated based on photometry values obtained by the plurality of photometries.

Patent Document 1 discloses an analyzer which automatically performs such a series of processes. That is, in the analyzer disclosed in Patent Document 1, while rotating the cuvette table intermittently, various processes, such as washing, dispensing of the sample, dispensing of the reagent, agitating, and photometry of the reaction liquid, are performed to the same cuvette at positions on the analyzer which correspond to the respective processes.

### [Reference Document(s) of Conventional Art]

### [Patent Document]

[Patent Document 1] JP1996-304413A

### DESCRIPTION OF THE DISCLOSURE

### [Problem(s) to be Solved by the Disclosure]

According to the method of repeatedly and intermittently rotating the cuvette table, a period (timing) when a rotational speed of the cuvette table does not become constant exists, immediately after the cuvette table starts the rotation and immediately before the cuvette table ends the rotation. For the cuvette which passes through the photometric position on the analyzer during this period, a rotational offset (for example, a rotational retard or a rotation advance) accompanying the inertia caused by acceleration or deceleration of the rotation of the cuvette table affects the illuminated area on the cuvette, and the illuminated area on the cuvette is deviated from a desired position.

The photometry is performed a plurality of times to the same cuvette. In order to accurately calculate the analytical value of the component in the sample, it is desired to accurately perform the photometry to the same illuminated area on the same cuvette each time the cuvette passes through the photometric position on the analyzer and the photometry is performed. However, if the illuminated area on the cuvette is deviated, the photometry value varies, and the accuracy for calculating the analytical value of the component in the sample falls.

One purpose of the present disclosure is to provide an analyzer, an analyzing method, and a program, with a reduced adverse effect to photometry accompanying acceleration or deceleration of rotation of a cuvette table.

### [Means for Solving the Problem]

An analyzer according to the present disclosure includes a cuvette table where a plurality of cuvettes are disposed annularly, an actuator, a pretreatment part, a post treatment part, a photometry part, and a controller. The actuator drives the cuvette table so that the cuvette table performs intermittent rotation in which a resting state and a rotating state are repeatedly alternated, and each time the cuvette table rotates intermittently, a row of the plurality of cuvettes is displaced in the annular direction by a given number of cuvettes. The pretreatment part performs pretreatment to a cuvette among the plurality of cuvettes that stands still at a pretreatment position in the resting state. The post treatment part performs post treatment to a cuvette among the plurality of cuvettes that stands still at a post treatment position in the resting state. The photometry part performs photometry to a cuvette that passes through a photometric position in the rotating state. The controller, in the rotating state until the cuvette that stood still at the pretreatment position stands still at the post treatment position after the completion of the pretreatment, controls the actuator so that the cuvette passes through the photometric position at a fixed rotational speed, each time the cuvette passes through the photometric position.

### [Effect of the Disclosure]

According to the present disclosure, an analyzer, an analyzing method, and a program, with a reduced adverse effect to photometry accompanying acceleration or deceleration of rotation of a cuvette table can be provided.

### BRIEF DESCRIPTION OF DRAWINGS

Fig. 1 is a plan view illustrating a schematic configuration of an analyzer 1 according to a first embodiment of the present disclosure.
Fig. 2 is a plan view illustrating a configuration of a cuvette table 3, an actuator 4, and a photometry part 5 provided to the analyzer 1 according to the first embodiment of the present disclosure.
Fig. 3 is a functional block diagram of the analyzer 1 according to the first embodiment of the present disclosure.
Fig. 4 is a flowchart illustrating an analysis process which the analyzer 1 according to the first embodiment of the present disclosure performs to a row of cuvettes 2.
Fig. 5 is a schematic diagram illustrating an initial layout of the row of cuvettes 2 before the cuvette table 3 rotates intermittently in the first embodiment.
Fig. 6 is a schematic diagram illustrating the layout of the row of cuvettes 2 after the cuvette table 3 has operated for one sequence in the first embodiment.
Fig. 7 is a schematic diagram illustrating the layout of the row of cuvettes 2 after the cuvette table 3 has operated for two sequences in the first embodiment.
Fig. 8 is a schematic diagram illustrating the layout of the row of cuvettes 2 after the cuvette table 3 has operated for three sequences in the first embodiment.
Fig. 9 is a schematic diagram illustrating the layout of the row of cuvettes 2 after the cuvette table 3 has operated for 20 sequences in the first embodiment.
Fig. 10 is a schematic diagram illustrating the layout of the row of cuvettes 2 after the cuvette table 3 has operated for 21 sequences in the first embodiment.
Fig. 11 is a schematic diagram illustrating the layout of the row of cuvettes 2 after the cuvette table 3 has operated for 25 sequences in the first embodiment.
Fig. 12 is a schematic diagram illustrating an initial layout of the row of cuvettes 2 before the cuvette table 3 rotates intermittently in a second embodiment.
Fig. 13 is a schematic diagram illustrating the layout of the row of cuvettes 2 after the cuvette table 3 has operated for one sequence in the second embodiment.
Fig. 14 is a schematic diagram illustrating the layout of the row of cuvettes 2 after the cuvette table 3 has operated for two sequences in the second embodiment.
Fig. 15 is a schematic diagram illustrating the layout of the row of cuvettes 2 after the cuvette table 3 has operated for three sequences in the second embodiment.
Fig. 16 is a schematic diagram illustrating the layout of the row of cuvettes 2 after the cuvette table 3 has operated for five sequences in the second embodiment.
Fig. 17 is a schematic diagram illustrating the layout of the row of cuvettes 2 after the cuvette table 3 has operated for six sequences in the second embodiment.
Fig. 18 is a schematic diagram illustrating the layout of the row of cuvettes 2 after the cuvette table 3 has operated for 20 sequences in the second embodiment.
Fig. 19 is a schematic diagram illustrating the layout of the row of cuvettes 2 after the cuvette table 3 has operated for 21 sequences in the second embodiment.
Fig. 20 is a schematic diagram illustrating the layout of the row of cuvettes 2 after the cuvette table 3 has operated for 25 sequences in the second embodiment.

### MODES FOR CARRYING OUT THE DISCLOSURE

Hereinafter, embodiments of the present disclosure are described in detail with reference to the accompanying drawings. Note that, in the following description and drawings, the same reference characters indicate the same or similar components, and, therefore, redundant description for the same or similar components is omitted.

In the illustrative embodiments below, two kinds of reagents may be used for the same sample to analyze component(s) in the sample. In detail, in the analyzing process, after dispensing sample and first reagent into a cuvette, the reaction liquid may be agitated to prepare first-step reaction liquid, and a plurality of photometries may be performed to the first-step reaction liquid (first-step photometry). Then, after further dispensing second reagent into the first-step reaction liquid in the same cuvette, the reaction liquid may be agitated to prepare second-step reaction liquid, and a plurality of photometries may be performed to the second-step reaction liquid (second-step photometry). That is, the component in the sample may be analyzed based on the photometry data of the first-step reaction liquid and the photometry data of the second-step reaction liquid.

Note that, as will be described in the section of "Other Embodiments" which will be described later, in other embodiments of the present disclosure, component(s) in the sample may be analyzed using one kind of reagent (the first reagent). In this case, that is, the configuration required for the series of processings which use the second reagent may be omitted.

### [First Embodiment]

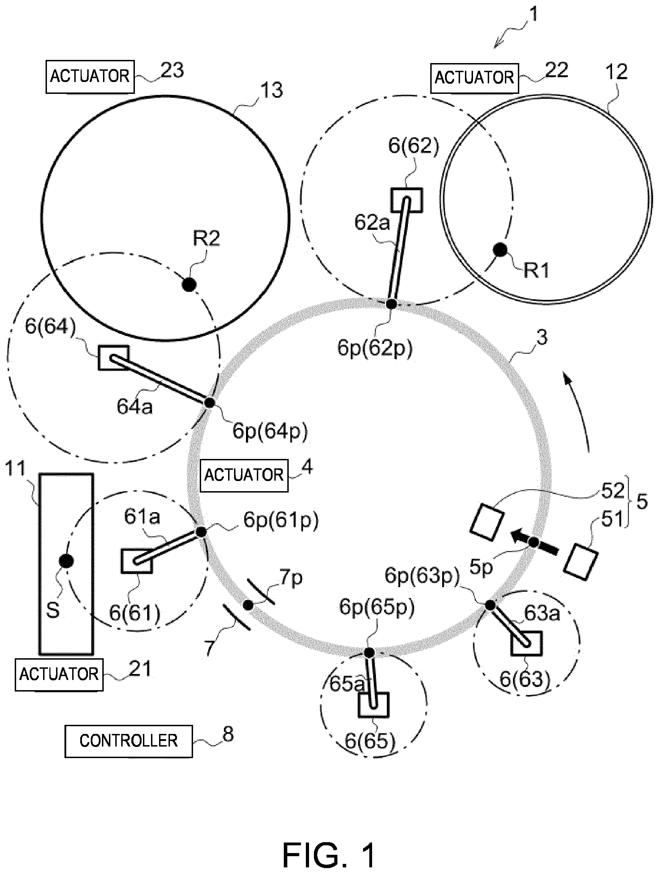

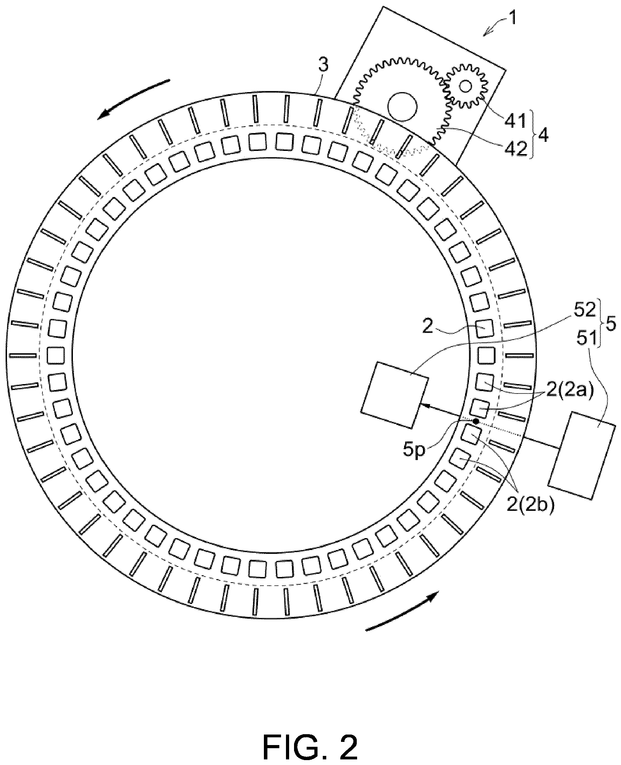

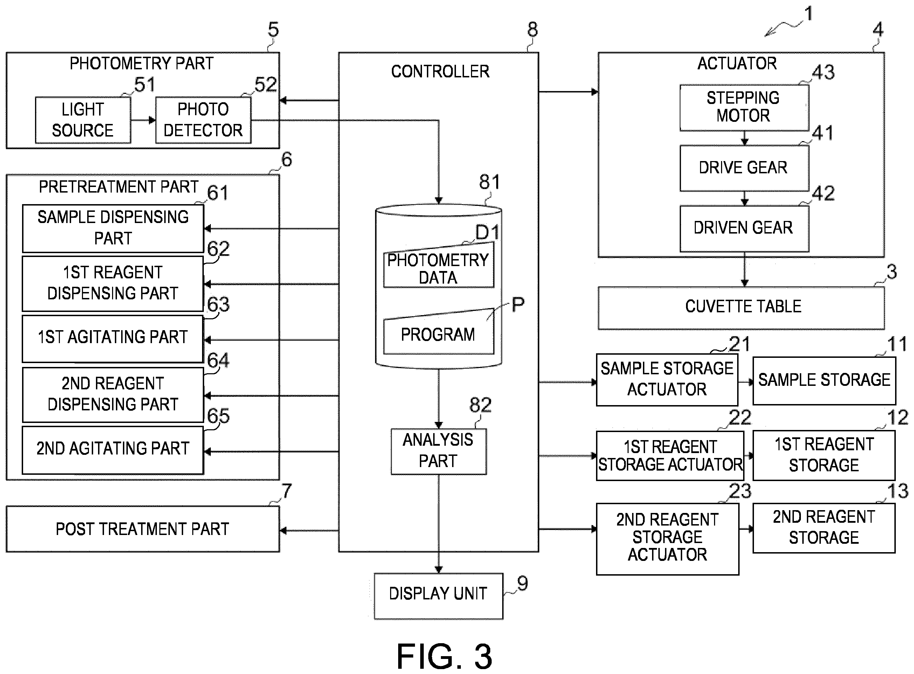

Fig. 1 is a plan view illustrating a schematic configuration of an analyzer 1 according to a first embodiment of the present disclosure. Fig. 2 is a plan view illustrating a configuration of a cuvette table 3, an actuator 4, and a photometry part 5 which are provided to the analyzer 1 according to the first embodiment of the present disclosure. Fig. 3 is a functional block diagram of the analyzer 1 according to the first embodiment of the present disclosure.

Referring to Fig. 1, the analyzer 1 is a device which analyzes reaction liquid of sample S (for example, blood, urine, etc.) and reagent, and may mainly include the cuvette table 3 where a plurality of cuvettes 2 (see Fig. 2) are disposed annularly, the actuator 4, the photometry part 5, a pretreatment part 6, a post treatment part 7, and a controller 8.

For example, the cuvette table 3 may be formed annularly in the plan view, and a row of the plurality of cuvettes 2 may be disposed in the annular direction (arc arrow lines in Fig. 2). The cuvette 2 may be a container which accommodates the sample S and the reagent, and present a rectangular parallelepiped shape (may also be a cube or other shapes) with an upper surface opened, for example. The cuvette table 3 may be driven by the actuator 4, and intermittently rotate while alternately repeating a resting state and a rotating state (hereinafter, referred to as "intermittently rotates"), so that the location of the row of cuvettes 2 is displaced in the annular direction (an arc arrow line in Fig. 1) by a given number of cuvettes every time. For example, the intermittent rotation which is performed in this embodiment may repeat the resting state and the rotating state in the following illustrated mode. First, from the resting state in which the cuvette table 3 stands still, an angular velocity (rotational speed) of the cuvette table 3 may increase, and it may reach a certain angular velocity. In a constant angular velocity state in which the angular velocity reached the certain angular velocity, the cuvette table 3 may continue the rotation for a given period of time, while maintaining the angular velocity. After the given period of time passes, the angular velocity of the cuvette table 3 may be lowered, and the cuvette table 3 may result in the resting state in which it stands still again. In the following description, one intermittent rotation of the cuvette table 3 is referred to as "one sequence." In this embodiment, a row of 50 cuvettes 2 may be annularly disposed on the cuvette table 3, and the row of cuvettes 2 may be displaced by 16 (the given number) cuvettes in the annular direction, each time the cuvette table 3 intermittently rotates for one sequence.

Referring to Figs. 1 and 3, in this embodiment, the periphery of the cuvette table 3 (an inner circumferential side and/or an outer circumferential side) may be provided with a sample storage 11 which accommodates a sample container, and a first reagent storage 12 and a second reagent storage 13 which accommodate a first reagent container and a second reagent container, respectively. After the cuvettes 2 are disposed on the cuvette table 3, the sample S may be supplied into the cuvette 2 from the sample container at a sample dispensing position 61p (described below), by using a pipette (not illustrated) provided to a sample dispensing part 61 of the pretreatment part 6. Similarly, first reagent R1 may be supplied into the cuvette 2 from the first reagent container at a first reagent dispensing position 62p (described below), by using a pipette (not illustrated) provided to a first reagent dispensing part 62 of the pretreatment part 6, and second reagent R2 may be supplied into the cuvette 2 from the second reagent container at a second reagent dispensing position 64p (described below), by using a pipette (not illustrated) provided to a second reagent dispensing part 64 of the pretreatment part 6. The reaction liquid in the cuvette 2 to which the sample S and the first reagent R1 are supplied may be then agitated at a first agitating position 63p (described below), by a first agitating part 63 of the pretreatment part 6, and the reaction liquid in the cuvette 2 to which the sample S, the first reagent R1, and the second reagent R2 are supplied may be then agitated at a second agitating position 65p (described below) by a second agitating part 65 of the pretreatment part 6.

Note that, in other embodiments in which the component(s) in the sample is analyzed using one kind of reagent, the second reagent storage 13, a second reagent storage actuator 23, the second reagent dispensing part 64, and the second agitating part 65 may be omitted.

The actuator 4 may drive the cuvette table 3 so that the cuvette table 3 intermittently rotates, and the position of the row of cuvettes 2 is displaced in the annular direction by the given number of cuvettes, each time the cuvette table 3 intermittently rotates for one sequence. The actuator 4 may be controlled by the controller 8. Referring to Fig. 2, in this embodiment, the actuator 4 may include, for example, a drive gear 41, and a driven gear 42 connected to the cuvette table 3 and the drive gear 41. The drive gear 41 may be attached to a stepping motor 43 (see Fig. 3), and by causing the stepping motor 43 to drive and rotating the drive gear 41, the cuvette table 3 can be rotated via the driven gear 42. Note that a stepping motor with servo control may be used as the stepping motor 43.

The photometry part 5 (hereinafter, also represented by a reference character "DTR") may emit light to each cuvette 2 which passes through a photometric position 5p on the analyzer 1, while the cuvette table 3 intermittently rotates, to measure outgoing light from the illuminated area on the cuvette 2 which passes through the photometric position 5p. In this embodiment, the photometry part 5 may include a light source 51 provided to the outer circumferential side of the cuvette table 3, and a photo detector 52 provided to the inner circumferential side of the cuvette table 3.

The light source 51 may be, for example, comprised of a halogen lamp, and emit light toward the photo detector 52. While the cuvette table 3 rotates, the cuvette 2 may cross an optical path of the outgoing light from the light source 51 (a straight arrow line in Fig. 2). A position where the optical path of the outgoing light from the light source 51 and the course of the cuvettes 2 cross may be the photometric position 5p.

When the cuvette 2 passes through the photometric position 5p, the outgoing light from the light source 51 may illuminate the cuvette 2. The light which entered into the illuminated area of the cuvette 2 may pass through the inside thereof, and come out from the illuminated area (more accurately, the back side of the illuminated area) of the cuvette 2, and this outgoing light may enter into the photo detector 52. The photo detector 52 may photoelectrically convert the outgoing light from the cuvette 2, and output to the controller 8 a voltage signal according to the quantity of light as photometry data D1.

In this embodiment, the pretreatment part 6 may include the sample dispensing part 61, the first reagent dispensing part 62, the first agitating part 63, the second reagent dispensing part 64, and the second agitating part 65. Here, because of other embodiments in which the component(s) in the sample is analyzed using one kind of reagent, as described above, the pretreatment part 6 provided with the sample dispensing part 61, the first reagent dispensing part 62, and the first agitating part 63 may be referred to as "the early pretreatment part 6," and the pretreatment part 6 provided with the second reagent dispensing part 64 and the second agitating part 65 may be referred to as "the later pretreatment part 6," for convenience. The sample dispensing part 61, the first reagent dispensing part 62, the first agitating part 63, the second reagent dispensing part 64, and the second agitating part 65 which are provided to the pretreatment part 6 may pretreat the cuvettes 2 located at pretreatment positions 6p (61p-65p) which will be described below, respectively, when the row of cuvettes 2 disposed on the cuvette table 3 is in the resting state.

That is, in this embodiment in which the component(s) in the sample is analyzed using two kinds of reagents to the same sample, the supply of the sample S, the supply of the first reagent R1, the agitation of the reaction liquid in the cuvette 2 to which the first reagent R1 is supplied, the supply of the second reagent R2, and the agitation of the reaction liquid in the cuvette 2 to which the second reagent R2 is supplied, may be performed as the pretreatments. Here, because of other embodiments in which the component(s) in the sample is analyzed using one kind of reagent, as described above, the pretreatment including the supply of the sample S, the supply of the first reagent R1, and the agitation of the reaction liquid in the cuvette 2 to which the first reagent R1 is supplied may be referred to as "the early pretreatment," and the supply of the second reagent R2 and the agitation of the reaction liquid in the cuvette 2 to which the second reagent R2 is supplied may be referred to as "the later pretreatment," for convenience. The pretreatment positions 6p may include the sample dispensing position 61p, the first reagent dispensing position 62p, the first agitating position 63p, the second reagent dispensing position 64p, and the second agitating position 65p. Here, because of other embodiments in which the component(s) in the sample is analyzed using one kind of reagent, as described above, the pretreatment positions 6p including the sample dispensing position 61p, the first reagent dispensing position 62p, and the first agitating position 63p may be referred to as "the early pretreatment positions 6p," and the pretreatment positions 6p including the second reagent dispensing position 64p and the second agitating position 65p may be referred to as "the later pretreatment positions 6p," for convenience.

The sample dispensing part 61 may include an arm 61a and the pipette (not illustrated), and supply the sample S from the sample storage 11 into the cuvette 2 which stands still at the sample dispensing position 61p on the analyzer 1 (perform dispensing processing of the sample S). The first reagent dispensing part 62 may include an arm 62a and the pipette (not illustrated), and supply the first reagent R1 from the first reagent storage 12 into the cuvette 2 which stands still at the first reagent dispensing position 62p on the analyzer 1 (perform dispensing processing of the first reagent R1). The first agitating part 63 may include an arm 63a and a stirring rod (not illustrated), and agitate the reaction liquid in the cuvette 2 which stands still at the first agitating position 63p (perform agitating processing). The second reagent dispensing part 64 may include an arm 64a and the pipette (not illustrated), and supply the second reagent R2 from the second reagent storage 13 into the cuvette 2 which stands still at the second reagent dispensing position 64p on the analyzer 1 (perform dispensing processing of the second reagent R2). The second agitating part 65 may include an arm 65a and a stirring rod (not illustrated), and agitate the reaction liquid in the cuvette 2 which stands still at the second agitating position 65p (perform agitating processing). Note that, although the first agitating part 63 and the second agitating part 65 are based on an agitating method using the stirring rods, they may be based on other agitating methods, such as an agitating method using ultrasonic waves, for example, without being limited to the configuration described above.

The sample dispensing position 61p, the first reagent dispensing position 62p, the first agitating position 63p, the second reagent dispensing position 64p, and the second agitating position 65p may be the above-described pretreatment positions (the early pretreatment positions and the later pretreatment positions) 6p, and mean positions on the analyzer 1 at which processing which is performed before a post treatment, such as washing, is performed. These positions on the analyzer 1 at which each processing is performed may not change, even when the cuvette table 3 intermittently rotates.

Note that, in other embodiments in which the component(s) in the sample is analyzed using one kind of reagent (the first reagent R1), the supply of the sample S, the supply of the first reagent R1, and the agitation of the reaction liquid in the cuvette 2 to which the first reagent R1 is supplied may be performed (i.e., the early pretreatment may be performed), for example, as the pretreatment, and the supply of the second reagent R2 and the agitation of the reaction liquid in the cuvette 2 to which the second reagent R2 is supplied may not be performed (the later pretreatment may not be performed). The pretreatment position 6p in this case may include the sample dispensing position 61p, the first reagent dispensing position 62p, and the first agitating position 63p (i.e., include the early pretreatment positions 6p), but may not include the second reagent dispensing position 64p and the second agitating position 65p (may not include the later pretreatment positions 6p). That is, in other embodiments in which the component(s) in the sample is analyzed using one kind of reagent, the second reagent dispensing part 64 and the second agitating part 65 (the later pretreatment part 6) may be omitted, and the pretreatment (the later pretreatment) may not be performed to the cuvettes 2 which stand still at the second reagent dispensing position 64p and the second agitating position 65p (the later pretreatment positions 6p).

The post treatment part 7 may carry out the post treatment of the cuvette 2 which stands still at a post treatment position 7p on the analyzer 1, when the row of cuvettes 2 disposed on the cuvette table 3 is in the resting state. In this embodiment, the post treatment part 7 may be a cuvette washing part 7 which discharges the reaction liquid inside the cuvette 2 and washes the cuvette 2 with given cleaning fluid (performs washing), for example.

The post treatment position 7p may mean a position on the analyzer 1 at which processing performed after the pretreatment including the sample dispensing etc. is performed. The position of the post treatment position 7p may not change, even when the cuvette table 3 intermittently rotates.

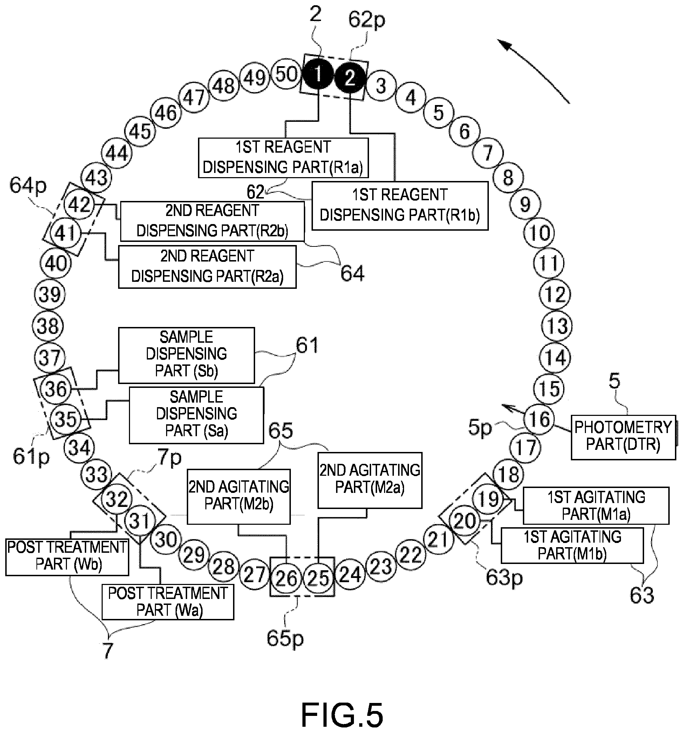

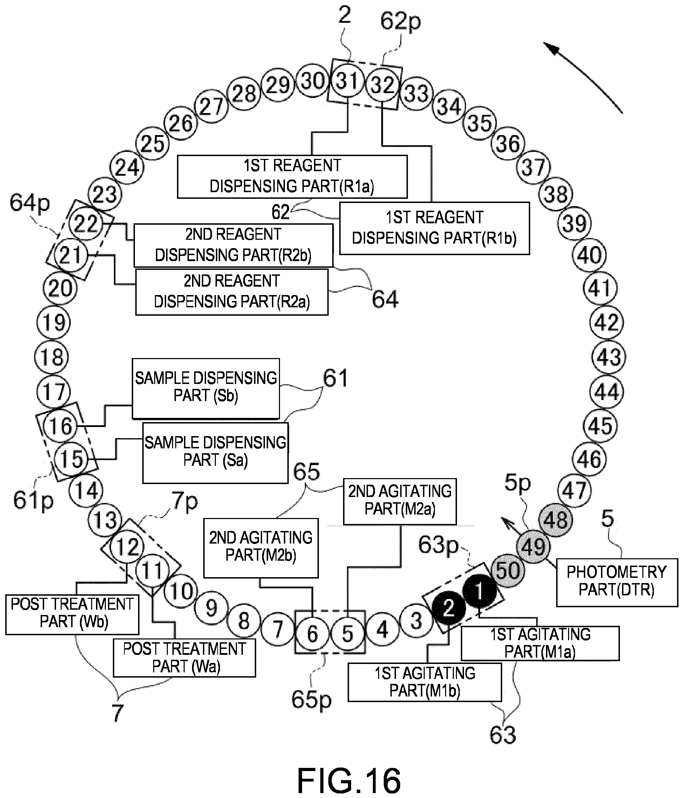

Note that, although illustration is omitted in Fig. 1, in this embodiment, the sample dispensing part 61, the first reagent dispensing part 62, the first agitating part 63, the second reagent dispensing part 64, and the second agitating part 65 of the pretreatment part 6, and the post treatment part 7 (the cuvette washing part 7) each may be provided with two sets of processing units (hereinafter, referred to as "a-system" and "b-system"). That is, as illustrated in the schematic diagrams of Figs. 5 to 20 which will be described later, the sample dispensing part 61 may be provided with the two sets of processing units which are the a-system and the b-system (hereinafter, in order to distinguish one from the other, may also be represented by reference characters "Sa" and "Sb"), and the two sets of sample dispensing parts Sa and Sb may dispense the sample S into two cuvettes 2 which are located adjacent to each other at the sample dispensing position 61p. In this case, the sample dispensing position 61p may mean the positions of the two adjacent cuvettes, for example, which are enclosed by a box in Fig. 5, and the positions of these two adjacent cuvettes may be distinguishably referred to as "the first sample dispensing position 61p" and "the second sample dispensing position 61p," respectively. Similar things may be said about the first reagent dispensing part 62 (hereinafter, also represented by reference characters "R1a" and "R1b"), the first agitating part 63 (hereinafter, also represented by reference characters "M1a" and "M1b"), the second reagent dispensing part 64 (hereinafter, also represented by reference characters "R2a" and "R2b"), the second agitating part 65 (hereinafter, also represented by reference characters "M2a" and "M2b"), and the post treatment part 7 (hereinafter, also represented by reference characters "Wa" and "Wb"), and similar things may be said to the first reagent dispensing position 62p, the first agitating position 63p, the second reagent dispensing position 64p, the second agitating position 65p, and the post treatment position 7p.

In this embodiment, a processing unit belonging to the a-system may perform processing to other processing unit belonging to the a-system, and a processing unit belonging to the b-system may perform processing to other processing unit belonging to the b-system. For example, in the a-system, the sample dispensing part Sa may dispense the sample into the cuvette 2, the first reagent dispensing part R1a may dispense the reagent R1 into the cuvette 2, and the first agitating part M1a may agitate. After the first photometry and the second photometry are performed by the photometry part DTR, the cuvette washing part Wa may wash the cuvette 2.

Note that, in other embodiments in which the component(s) in the sample is analyzed using one kind of reagent (the first reagent R1), the second reagent dispensing parts 64 (R2a, R2b) and the second agitating parts 65 (M2a, M2b) which have the respective two systems, the a-system and the b-system, may be omitted. That is, the later pretreatment of each system may be omitted.

The controller 8 may be an information processor which controls various operations of the analyzer 1. Referring to Fig. 3, the controller 8 may include a memory 81 and an analysis part 82. The memory 81 may be a configuration of hardware, and the analysis part 82 may be a functional block by software. A control by the controller 8 including processing by the analysis part 82 may be implemented by executing a computer program P stored in the memory 81. Although not illustrated, the controller 8 may further be provided with a processor, such as a CPU, which performs data processing, as a configuration of the hardware.

In this embodiment, the controller 8 may operate the actuator 4, and a sample storage actuator 21, a first reagent storage actuator 22, and the second reagent storage actuator 23, which will be described later, so as to synchronize the actuator 4 with the actuators. Further, the controller 8 may control operation of the photometry part 5, the pretreatment part 6, and the post treatment part 7 according to the intermittent rotation of the cuvette table 3 through the actuator 4. The photometry part 5 may be activated when the cuvette table 3 is in the rotating state (including a speed changing state, such as an accelerating state and a decelerating state), and the pretreatment part 6 and the post treatment part 7 may be activated when the cuvette table 3 is in the resting state. According to the control operation by the controller 8, and the layout of the photometric position 5p, the pretreatment positions 6p, and the post treatment position 7p on the analyzer 1, the controller 8 may perform, in the rotating state until the cuvette which stood still at the pretreatment position 6p stands still at the post treatment position 7p after the completion of the pretreatment, a control for causing the actuator to make the cuvette pass through the photometric position 5p at a fixed rotational speed, each time the cuvette passes through the photometric position 5p.

In this embodiment, for example, the controller 8 may rotate the cuvette table 3 for about three seconds, and maintain the resting state for about seven seconds. That is, the controller 8 may perform the one-sequence intermittent rotation of the cuvette table 3, every about 30 seconds.

The memory 81 may store the computer program P which performs the control by the controller 8, various data which is used by the controller 8, etc. The memory 81 may be comprised of a volatile memory such as a DRAM, or a nonvolatile memory such as a flash memory, or a combination of both.

The analysis part 82 may analyze the component(s) in the sample S based on the photometry data D1. The analysis of the component(s) may be performed to each of the photometry data for the first-step reaction liquid of the sample S and the first reagent R1, and the photometry data for the second-step reaction liquid which is prepared by further dispensing the second reagent R2 to the first-step reaction liquid. The analysis result by the analysis part 82 may be displayed on a display unit 9.

In this embodiment, the sample storage 11 may be conveying equipment (a conveying line) which sequentially conveys a plurality of samples S, and may be driven by the controller 8 via the sample storage actuator 21. In this embodiment, the first reagent storage 12 may be formed annularly in the plan view, where a plurality of first reagent containers, each containing the first reagent R1, are disposed in the annular direction. The first reagent storage 12 may be rotated by the controller 8 via the first reagent storage actuator 22. In this embodiment, the second reagent storage 13 may be formed annularly in the plan view, where a plurality of second reagent containers, each containing the second reagent R2, are disposed in the annular direction. The second reagent storage 13 may be rotated by the controller 8 via the second reagent storage actuator 23.

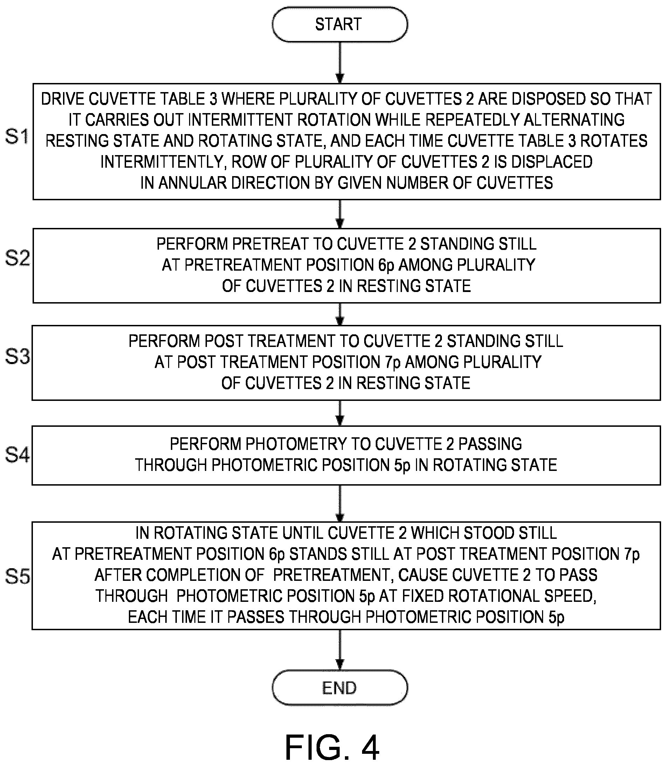

Below, referring to Table 1 and Figs. 4 to 11, the analysis process (analyzing method) which the analyzer 1 performs to the row of cuvettes 2 disposed on the cuvette table 3 is described.

Fig. 4 is a flowchart illustrating the analysis process which the analyzer 1 according to the first embodiment of the present disclosure performs to the row of cuvettes 2.

In the analysis process (analyzing method) which the analyzer 1 performs, the control may be performed so that the cuvette table 3 where the plurality of cuvettes 2 are disposed annularly is driven so that the cuvette table 3 carries out the intermittent rotation in which the resting state and the rotating state are repeatedly alternated, and each time the cuvette table 3 rotates intermittently, the row of the plurality of cuvettes 2 is displaced in the annular direction by the given number of cuvettes (Step S1). In the resting state, the pretreatment may be performed to the cuvette 2 among the plurality of cuvettes 2 which stands still at the pretreatment position 6p (Step S2). In the resting state, the post treatment may be performed to the cuvette 2 among the plurality of cuvettes 2 which stands still at the post treatment position 7p (Step S3). In the rotating state, the photometry may be performed to the cuvette 2 which passes through the photometric position 5p, and in the rotating state until the cuvette 2 which stood still at the pretreatment position 6p stands still at the post treatment position 7p after the completion of the pretreatment, the cuvette 2 may be caused to pass through the photometric position 5p at the fixed rotational speed, each time it passes through the photometric position 5p (Step S4).

Further, when the analyzer 1 performs the analysis process (analyzing method), the computer program P stored in the controller 8 may cause the computer to realize a control function in which the cuvette table 3 where the plurality of cuvettes 2 are disposed annularly is driven so that the cuvette table 3 carries out the intermittent rotation in which the resting state and the rotating state are repeatedly alternated, and each time the cuvette table 3 rotates intermittently, the row of the plurality of cuvettes 2 is displaced in the annular direction by the given number of cuvettes, a control function in which, in the resting state, the pretreatment is performed to the cuvette 2 among the plurality of cuvettes 2 which stands still at the pretreatment position 6p, a control function in which, in the resting state, the post treatment is performed to the cuvette 2 among the plurality of cuvettes 2 which stands still at the post treatment position 7p, a control function in which, in the rotating state, the photometry is performed to the cuvette 2 which passes through the photometric position 5p, and a control function in which, in the rotating state until the cuvette 2 which stood still at the pretreatment position 6p stands still at the post treatment position 7p after the completion of the pretreatment, the cuvette 2 is caused to pass through the photometric position 5p at the fixed rotational speed, each time it passes through the photometric position 5p.

In the first embodiment of the present disclosure which is described with reference to Table 1, each part of the pretreatment part 6 and the post treatment part 7 each may be provided with the two sets of processing units, the a-system and the b-system. The sample dispensing part Sa (first pretreatment part) of the a-system may perform the processing to the cuvette 2 which stands still at the first sample dispensing position 61p, and the sample dispensing part Sb (second pretreatment part) of the b-system may perform the processing to the cuvette 2 which stands still at the second sample dispensing position 61p. The first reagent dispensing part R1a (first pretreatment part) of the a-system may perform the processing to the cuvette 2 which stands still at the first first reagent dispensing position 62p, and the first reagent dispensing part R1b (second pretreatment part) of the b-system may perform the processing to the cuvette 2 which stands still at the second first reagent dispensing position 62p. The first agitating part M1a (first pretreatment part) of the a-system may perform the processing to the cuvette 2 which stands still at the first first agitating position 63p, and the first agitating part M1b (second pretreatment part) of the b-system may perform the processing to the cuvette 2 which stands still at the second first agitating position 63p. The second reagent dispensing part R2a (first pretreatment part) of the a-system may perform the processing to the cuvette 2 which stands still at the first second reagent dispensing position 64p, and the second reagent dispensing part R2b (second pretreatment part) of the b-system may perform the processing to the cuvette 2 which stands still at the second second reagent dispensing position 64p. The second agitating part M2a (first pretreatment part) of the a-system may perform the processing to the cuvette 2 which stands still at the first second agitating position 65p, and the second agitating part M2b (second pretreatment part) of the b-system may perform the processing to the cuvette 2 which stands still at the second second agitating position 65p. Here, because of other embodiments in which the component(s) in the sample is analyzed using one kind of reagent, as described above, the first pretreatment and the second pretreatment including the sample dispensing by the sample dispensing parts Sa and Sb, the first reagent dispensing by the first reagent dispensing parts R1a and R1b, the first agitating by the first agitating parts R1a and R1b of the systems may be referred to as "the first early pretreatment" and "the second early pretreatment," respectively, for convenience. Further, the first pretreatment and the second pretreatment including the second reagent dispensing by the second reagent dispensing parts R2a and R2b, and the second agitating by the second agitating parts M2a and M2b may be referred to as "the first later pretreatment" and "the second later pretreatment," respectively.

The post treatment part Wa (first post treatment part) of the a-system may perform the processing to the cuvette 2 which stands still at the first post treatment position 7p, and the post treatment part Wb (second post treatment part) of the b-system may perform the processing to the cuvette 2 which stands still at the second post treatment position 7p. The sample dispensing part Sa, the first reagent dispensing part R1a, the first agitating part M1a, the second reagent dispensing part R2a, and the second agitating part M2a, which pretreat the a-system, may be referred to as "the first pretreatment part," and the sample dispensing part Sb, the first reagent dispensing part R1b, the first agitating part M1b, the second reagent dispensing part R2b, and the second agitating part M2b, which pretreat the b-system, may be referred to as "the second pretreatment part." Here, because of other embodiments in which the component(s) in the sample is analyzed using one kind of reagent, as described above, the first pretreatment part and the second pretreatment part having the sample dispensing parts Sa and Sb, the first reagent dispensing parts R1a and R1b, and the first agitating parts M1a and M1b of the systems may be referred to as "the first early pretreatment part" and "the second early pretreatment part," respectively, for convenience. Further, the first pretreatment part and the second pretreatment part having the second reagent dispensing parts R2a and R2b, and the second agitating parts M2a and M2b of the systems may be referred to as "the first later pretreatment part" and "the second later pretreatment part," respectively. The first sample dispensing position 61p, the first first reagent dispensing position 62p, the first first agitating position 63p, the first second reagent dispensing position 64p, and the first second agitating position 65p, where the pretreatments of the a-system are performed, may be referred to as "the first pretreatment positions," and the second sample dispensing position 61p, the second first reagent dispensing position 62p, the second first agitating position 63p, the second second reagent dispensing position 64p, and the second second agitating position 65p, where the pretreatments of the b-system are performed, may be referred to as "the second pretreatment positions." Here, because of other embodiments in which the component(s) in the sample is analyzed using one kind of reagent, as described above, the first pretreatment position and the second pretreatment position including the first sample dispensing position 61p and the second sample dispensing position 61p, the first first reagent dispensing position 62p and the second first reagent dispensing position 62p, and the first first agitating position 63p and the second first agitating position 63p may be referred to as "the first early pretreatment position" and "the second early pretreatment position," respectively, for convenience. Further, the first pretreatment position and the second pretreatment position including the first second reagent dispensing position 64p and the second second reagent dispensing position 64p, and the first second agitating position 65p and the second second agitating position 65p may be referred to as "the first later pretreatment position" and "the second later pretreatment position," respectively.

Table 1 is a table illustrating in detail the analysis process which the analyzer 1 according to the first embodiment of the present disclosure performs to the row of cuvettes 2. In Table 1, operation which each of the photometry part 5, the pretreatment part 6, and the post treatment part 7 performs to the cuvette 2 is illustrated for every intermittent rotation of the cuvette table 3 (see each line of Table 1). Figs. 5 to 11 are schematic diagrams illustrating relationships between the intermittent rotating operation of the cuvette table 3 illustrated in Table 1, and the operation which each of the photometry part 5, the pretreatment part 6, and the post treatment part 7 performs to the cuvette 2.

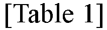

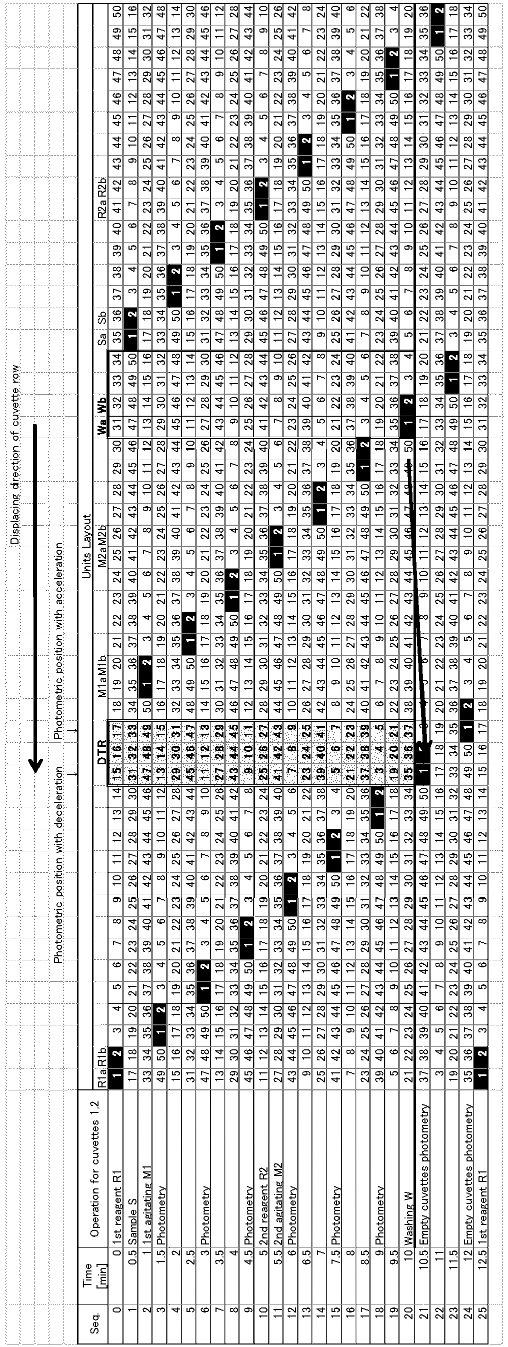

As illustrated in Table 1 and Figs. 5 to 11, while the cuvette table 3 rotates intermittently, the photometry position 5p, the pretreatment positions 6p (the sample dispensing position 61p, the first reagent dispensing position 62p, the first agitating position 63p, the second reagent dispensing position 64p, and the second agitating position 65p), and the post treatment position 7p on the analyzer 1 may be fixed.

When the row of cuvettes 2 is in the resting state, for example, the given number of cuvettes located in the positive rotational direction (the direction of the arc arrow line in Fig. 5) from the photometric position 5p may be cuvettes which passed through the photometric position 5p, while the cuvettes being decelerated immediately before being in the resting state, and, for example, the given number of cuvettes located in the negative rotational direction from the photometric position 5p may be cuvettes which pass through the photometric position 5p, while the cuvettes being accelerated when starting the next sequence operation immediately after the resting state. In this embodiment, in more detail, when the row of cuvettes 2 is in the resting state, as illustrated in Table 1 (in more detail, see operation from the 25th sequence to the zeroth sequence of Table 1, and operation from the zeroth sequence to the 25th sequence), one cuvette 2 located in the positive rotational direction from the photometric position 5p may pass through the photometric position 5p, while the cuvette being decelerated, and one cuvette 2 located in the negative rotational direction (the opposite direction from the arc arrow line in Fig. 5) from the photometric position 5p may pass through the photometric position 5p, while the cuvette being accelerated.

Below, the first and second cuvettes located at the leading end of the row, which are displayed by a black and white reversal in Table 1 and Figs. 5 to 110 (hereinafter, "cuvettes of interest") are mainly described. As will be described below, in the rotating state until the cuvettes of interest which stood still at the pretreatment position 6p stand still at the post treatment position 7p after the completion of the pretreatment, the cuvettes of interest may pass through the photometric position 5p at the fixed rotational speed, each time they pass through the photometric position 5p.

Fig. 5 illustrates an initial layout of the row of cuvettes 2 before the cuvette table 3 rotates intermittently. In the resting state of the initial layout (zeroth sequence), the first reagent R1 may be dispensed into the cuvettes of interest at the first reagent dispensing position 62p by the first reagent dispensing parts 62 (R1a, R1b).

Note that the 31st and 32nd cuvettes may be washed by the cuvette washing parts 7 (Wa, Wb) at the post treatment position 7p.

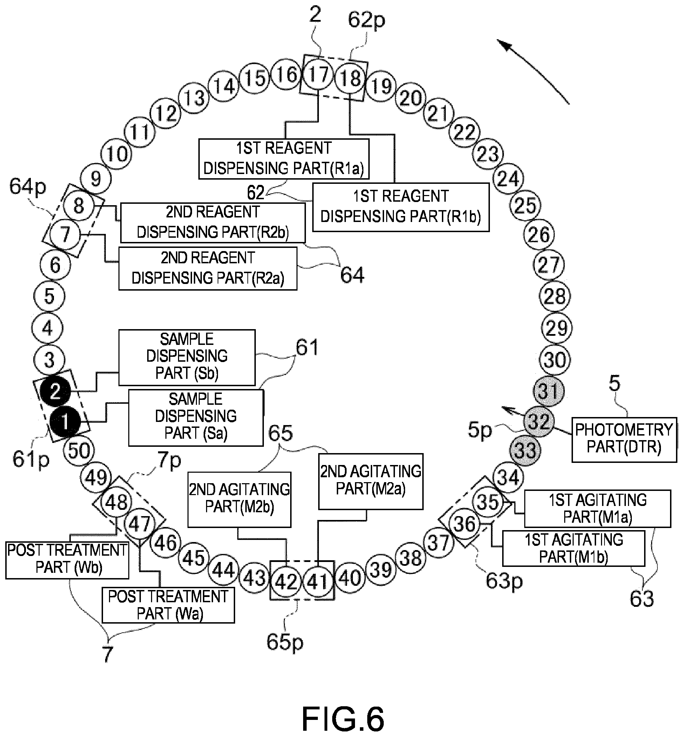

Fig. 6 illustrates the layout of the row of cuvettes 2 after the cuvette table 3 has operated for one sequence (moved by 16 cuvettes).

After the first sequence operation, the sample S may be dispensed into the cuvettes of interest at the sample dispensing position 61p by the sample dispensing parts 61 (Sa, Sb). The first reagent dispensing parts 62 (R1a, R1b) which dispensed the first reagent R1 into the cuvettes of interest in the previous sequence may dispense the first reagent R1 into the 17th and 18th cuvettes in this sequence.

The 31st cuvette located in the positive rotational direction from the photometric position 5p may be a cuvette which passed through the photometric position 5p, while the cuvette being decelerated, and the 33rd cuvette located in the negative rotational direction from the photometric position 5p may be a cuvette which passes through the photometric position 5p, while the cuvette being accelerated during the next sequence operation. The 32nd cuvette may be a cuvette located at the photometric position 5p in the resting state. These 31st to 33rd cuvettes may be non-prepared cuvettes which are not prepared for performing the first-step photometry, which will be described later.

The 47th and 48th cuvettes may be washed by the cuvette washing parts 7 (Wa, Wb) at the post treatment position 7p.

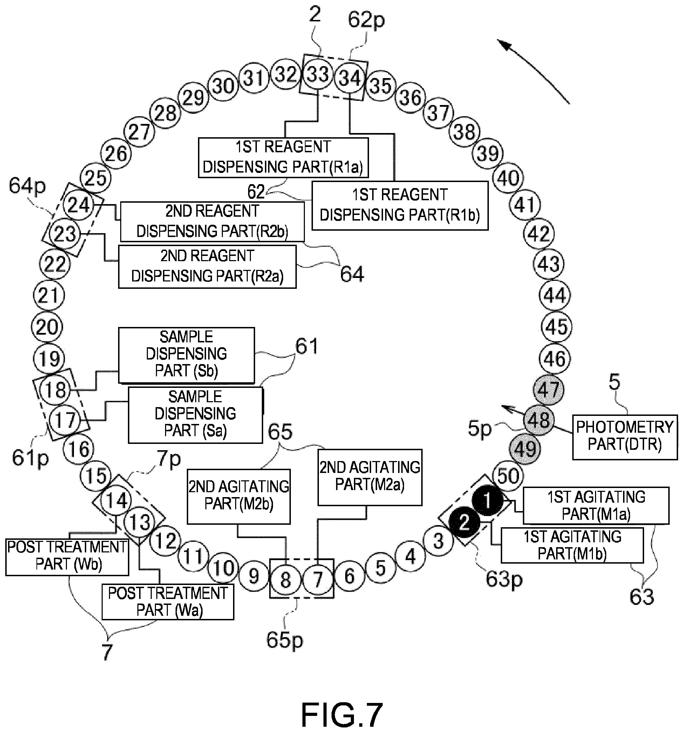

Fig. 7 illustrates the layout of the row of cuvettes 2 after the cuvette table 3 has operated for two sequences (moved by 32 cuvettes).

After the second sequence operation, the first reagent R1 and the sample S in the cuvettes of interest may be agitated to prepare the first-step reaction liquid by the first agitating parts 63 (M1a, M1b) at the first agitating position 63p. Thus, as for the cuvettes of interest, the pretreatment for the first-step photometry may be completed. For the cuvettes of interest, the photometry (first-step photometry) may be performed as the cuvettes of interest pass through the photometric position 5p during the subsequent sequence operations.

The 47th cuvette located in the positive rotational direction from the photometric position 5p may be a cuvette which passed through the photometric position 5p, while the cuvette being decelerated, and the 49th cuvette located in the negative rotational direction from the photometric position 5p may be a cuvette which passes through the photometric position 5p, while the cuvette being accelerated during the next sequence operation. The 48th cuvette may be a cuvette located at the photometric position 5p in the resting state. These 47th to 49th cuvettes may be also non-prepared cuvettes which are not prepared for performing the first-step photometry (described later).

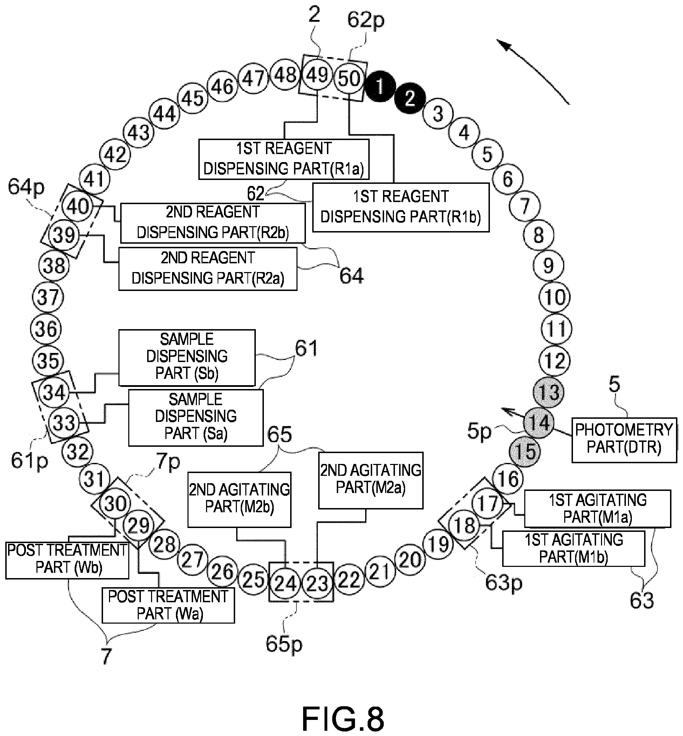

Fig. 8 illustrates the layout of the row of cuvettes 2 after the cuvette table 3 has operated for three sequences (moved by 48 cuvettes).

For the cuvettes of interest, the photometry data D1 may have been acquired by the photometry part 5 (DTR), by the cuvettes of interest passing through the photometric position 5p at the fixed speed. For the cuvettes of interest, the pretreatment for the first-step photometry may have been completed. Therefore, the photometry data D1 of the cuvettes of interest acquired during this sequence operation may be photometry data which is not influenced by the inertia caused during the acceleration or the deceleration of the cuvette table 3.

After that, as illustrated in Table 1, the sequence in which the cuvette table 3 rotates intermittently may be repeated and the first-step photometry may be performed to the cuvettes of interest to acquire the photometry data D1 each of during the sixth sequence operation and during the ninth sequence operation. The photometry data D1 of the cuvettes of interest acquired in these sequences may also be the photometry data which is not influenced by the inertia caused during the acceleration or the deceleration of the cuvette table 3.

Further, after the 10th sequence operation, the second reagent R2 may be dispensed into the cuvettes of interest at the second reagent dispensing position 64p by the second reagent distributive pouring parts 64 (R2a, R2b). After the 11th sequence operation, the first-step reaction liquid and the second reagent in the cuvettes of interest may be agitated to prepare the second-step reaction liquid at the second agitating position 65p by the second agitating parts 65 (M2a, M2b). Thus, for the cuvettes of interest, the pretreatment for the second-step photometry may be completed. As for the cuvettes of interest, the photometry (second-step photometry) may be performed by the cuvettes of interest passing through the photometric position 5p during the subsequent sequence operations.

After that, as illustrated in Table 1, the sequence in which the cuvette table 3 rotates intermittently may be repeated, and the second-step photometry may be performed to the cuvettes of interest to acquire the photometry data D1 each of during the 12th sequence operation, during the 15th sequence operation, and during the 18th sequence operation.

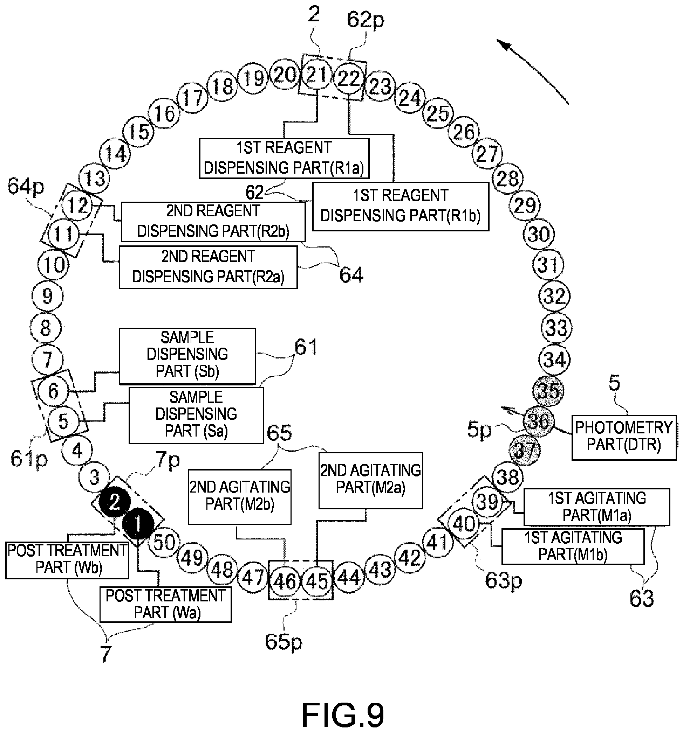

Fig. 9 illustrates the layout of the row of cuvettes 2 after the cuvette table 3 has operated for 20 sequences (moved by 320 cuvettes). After the 20th sequence operation, as for the cuvettes of interest, the reaction liquid (second-step reaction liquid) may be discharged and the cuvettes of interest may be washed with the given cleaning fluid at the post treatment position 7p by the cuvette washing parts 7 (Wa, Wb).

As illustrated in Table 1, the cuvettes of interest may stand still neither at the photometric position 5p, nor at the position where the photometry is performed while the cuvette of interest being decelerated, nor at the position where the photometry is performed while the cuvette of interest being accelerated, until after the 20th sequence operation when the post treatment is completed. That is, in the rotating state until the cuvettes of interest which stood still at the pretreatment position 6p stand still at the post treatment position 7p after the completion of the pretreatment, the cuvettes of interest may pass through the photometric position 5p at the fixed rotational speed, each time the cuvettes of interest pass through the photometric position 5p.

Further, as illustrated in Table 1, both the first and second cuvettes which are the cuvettes of interest may pass through the photometric position 5p at the fixed speed, when the cuvette table 3 is in the rotating state until after the 20th sequence operation when the post treatment is completed. The first cuvette and the second cuvette may stand still at the post treatment position 7p after the 20th sequence operation. Therefore, in the rotating state until the first and second cuvettes which stood still at the pretreatment position 6p stand still at the first post treatment position and the second post treatment position, respectively, after the completion of the pretreatment, both the first cuvette and the second cuvette may pass through the photometric position 5p at the fixed rotational speed (i.e., both the cuvettes may pass through the photometric position 5p at the fixed rotational speed during the same sequence), each time the cuvettes pass through the photometric position 5p substantially simultaneously. Note that the first post treatment position and the second post treatment position may correspond to positions of the cuvettes 2 for which the processing is performed by the two sets of processing units (i.e., the post treatment part Wa and the post treatment part Wb) among the post treatment positions 7p for the two cuvettes which are surrounded by the box in Fig. 9, respectively.

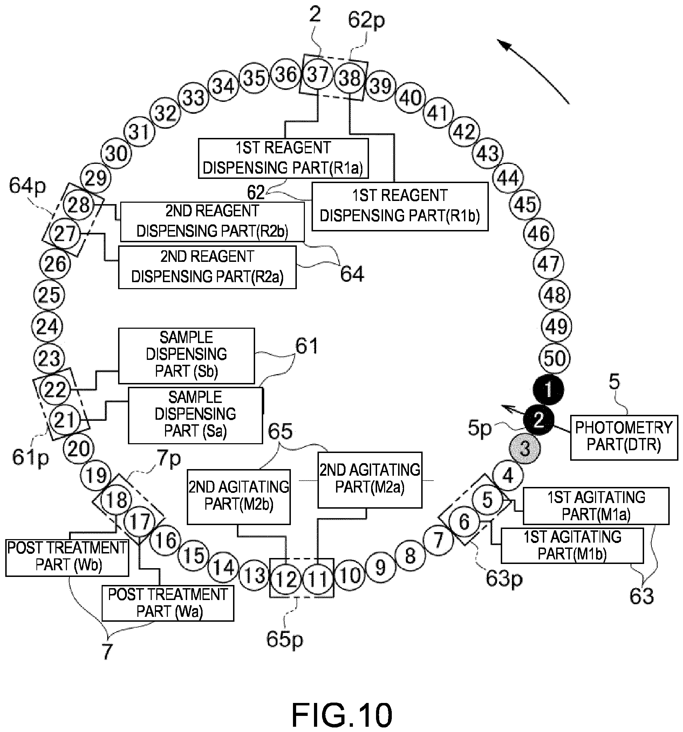

Fig. 10 illustrates the layout of the row of cuvettes 2 after the cuvette table 3 has operated for 21 sequences (moved by 336 cuvettes).

Among the first and second cuvettes which are the cuvettes of interest, the first cuvette may pass through the photometric position 5p, while the cuvette being decelerated. The photometry data D1 of this first cuvette may be influenced by the inertia caused during the deceleration of the cuvette table 3. Further, the second cuvette may stand still at the photometric position 5p in the resting state.

However, as illustrated in Table 1, these two cuvettes of interest may have already been post-treated after the previous 20th sequence operation, and may be cuvettes without the necessity of the photometry in the first place. Further, for these two cuvettes of interest, the first-step photometry and the second-step photometry may have already been completed in a state where they are not influenced by the inertia caused during the acceleration or the deceleration of the cuvette table 3. Therefore, the photometry data acquired for the cuvettes of interest during this sequence operation may be photometry data which does not need to be used for the analysis by the analysis part 82 in the first place, and it can be excluded from the analysis.

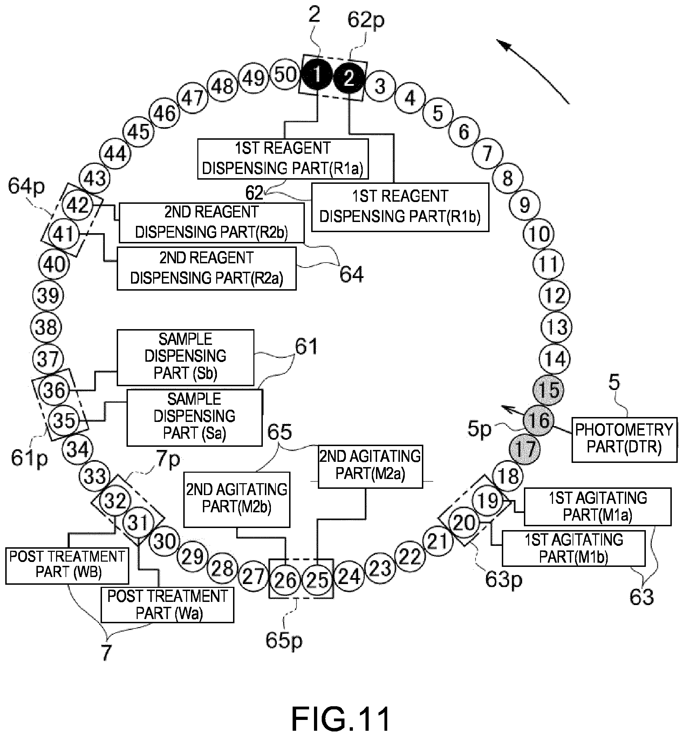

Fig. 11 illustrates the layout of the row of cuvettes 2 after the cuvette table 3 has operated for 25 sequences (moved by 400 cuvettes). For the analysis of new sample S, the first reagent R1 may be dispensed into the cuvettes of interest at the first reagent dispensing position 62p by the first reagent dispensing parts 62 (R1a, R1b).

As described above, as illustrated in Table 1, in this embodiment, the controller 8 may intermittently rotate the cuvette table 3 so that the cuvette after the post treatment for which the photometry does not need to be performed stands still at any of the photometric position 5p, the position where the photometry is performed while the cuvette being decelerated, and the position where the photometry is performed while the cuvette being accelerated. The photometry position 5p, the pretreatment positions 6p (the sample dispensing position 61p, the first reagent dispensing position 62p, the first agitating position 63p, the second reagent dispensing position 64p, and the second agitating position 65p), and the post treatment position 7p on the analyzer 1 may also be disposed so as to realize the above configuration.

Further, in this embodiment, the cuvette 2 which stood still at the post treatment position 7p after the previous sequence operation may stand still at the photometric position 5p after one sequence operation. That is, the controller 8 may cause the cuvette which stood still at the post treatment position 7p to stand still at the photometric position 5p after at least one intermittent rotating operation. As illustrated in Table 1, in this embodiment, the cuvette of interest (the second cuvette) which stands still at the photometric position 5p after the 21st sequence operation may stand still at the post treatment position 7p after the 20th sequence operation.

Further, in this embodiment, in the rotating state where the cuvette 2 passes through the photometric position 5p at the fixed rotational speed, a specific number of cuvettes 2 which are adjacent to each other forward and backward in the annular direction, including the cuvette 2 concerned, may pass through the photometric position 5p at the fixed rotational speed. The specific number of cuvettes 2 may be a number obtained by subtracting the number of cuvettes 2 which stand still at the photometric position 5p in the resting state and the number of cuvettes 2 which pass through the photometric position 5p in the rotating state during the acceleration or the deceleration of the rotation of the cuvette table 3, from the given number of cuvettes 2 (in this embodiment, 16 cuvettes).

For example, the state from after the second sequence operation to after the third sequence operation when the cuvettes of interest pass through the photometric position 5p at the fixed speed for the first time, as illustrated in Table 1, is described. In this embodiment, the given number of cuvettes 2 which rotate by one intermittent rotation may be 16. Further, the number of cuvettes 2 which stand still at the photometric position 5p in the resting state may be one, and the number of cuvettes 2 which pass through the photometric position 5p in the rotating state during the acceleration or the deceleration of the rotation of the cuvette table 3 may be one for each case. Therefore, in this embodiment, in the rotating state where the cuvette 2 passes through the photometric position 5p at the fixed rotational speed, the specific number of cuvettes 2 (in this case, 13 cuvettes) which are adjacent to each other forward and backward in the annular direction, including the cuvette 2 concerned, may pass through the photometric position 5p at the fixed rotational speed. Referring to the state after the second sequence operation of Table 1, the total of 13 cuvettes from the 50th cuvette to the 12th cuvettes which are adjacent to each other forward and backward, including the first cuvette which is the cuvette of interest, may pass through the photometric position 5p at the fixed rotational speed after the third sequence operation.

As described above, according to the analyzer 1 according to the first embodiment of the present disclosure, it can reduce the adverse effect to the photometry due to the inertia caused by the speed change during the acceleration or the deceleration of the cuvette table 3, and can automatically analyze the plurality of samples S. The photometry data excluded from the analysis may be the photometry data of the cuvette without the necessity of the photometry in the first place, and the accuracy of the analytical value calculated based on the photometry data will not fall.

Until now, since the variation in the photometry value according to the variation in the illuminated area on the cuvette is corrected by data processing, it is difficult to accurately correct the variation in the photometry value. On the other hand, according to the analyzer 1 according to the first embodiment of the present disclosure, since the photometry data of the cuvette without the necessity of the photometry in the first place is excluded from the analysis, the accuracy of the analytical value calculated based on the photometry data will not fall.

Further, until now, if the photometry value when the cuvette passes through the photometric position on the analyzer at a timing where the illuminated area on the cuvette is deviated due to inertia is not used for the calculation of the analytical value of the component(s) in the sample, the size of the analyzer including the cuvette table is enlarged. This is because it is necessary to extend the circumference length of the cuvette table by the moving distance of the cuvette which passed through the photometric position on the analyzer at the above-described timing where the illuminated area on the cuvette is deviated.

On the other hand, according to the analyzer 1 according to the first embodiment of the present disclosure, the size of the analyzer can be reduced, without enlarging the size of the analyzer.

### [Second Embodiment]

In the first embodiment, as illustrated from the case of the 20th sequence operation to the case of the 21st sequence operation, the controller 8 may intermittently rotate the cuvette table 3 so that the cuvette without the necessity of performing the photometry after the post treatment of the cuvette stands still at any of the photometric position 5p, the position where the photometry is performed while the cuvette being decelerated, and the position where the photometry is performed while the cuvette being accelerated.

In the second embodiment, until the preparation for performing the first-step photometry is completed, the controller 8 may intermittently rotate the cuvette table 3 so that the non-prepared cuvette which is not prepared for performing the first-step photometry stands still at any of the photometric position 5p, the position where the photometry is performed while the cuvette being decelerated, and the position where the photometry is performed while the cuvette being accelerated. The controller 8 may cause the cuvette to stand still at the photometric position 5p until the pretreatment of the cuvette is completed.

Since a configuration of the analyzer 1 which will be described below is similar to that of the analyzer 1 according to the first embodiment unless otherwise particularly described, redundant description is omitted.

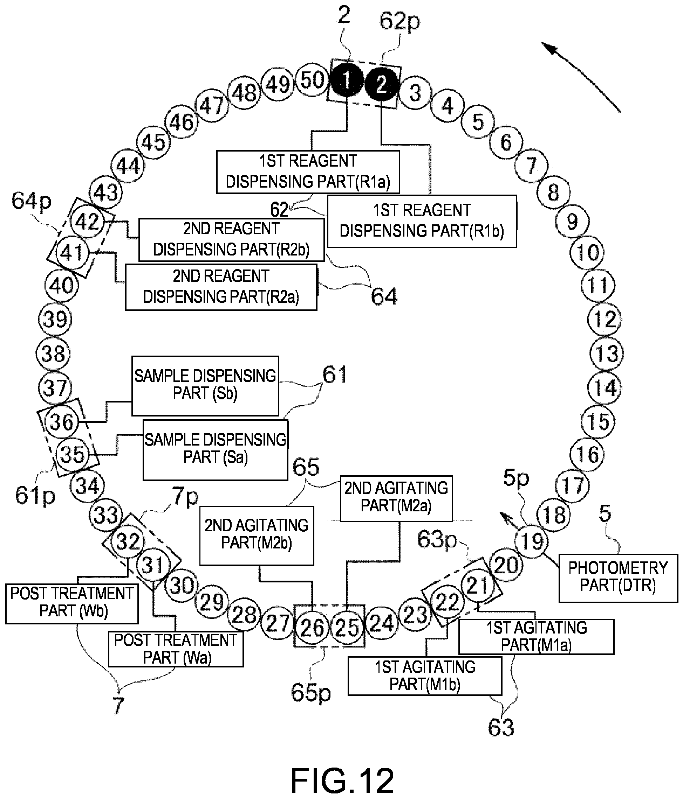

Table 2 is a table illustrating the analysis process which the analyzer 1 according to the second embodiment of the present disclosure performs to the row of cuvettes 2. Figs. 12 to 20 are schematic diagrams illustrating in detail relationships between intermittent rotating operation of the cuvette table 3 illustrated in Table 2 and operation which each of the photometry part 5, the pretreatment part 6, and the post treatment part 7 performs to the cuvette 2. As illustrated in Table 2 and Figs. 12 to 20, in the second embodiment, the layout of the photometric position 5p and the first agitating position 63p may be changed from the layout of the first embodiment.

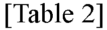

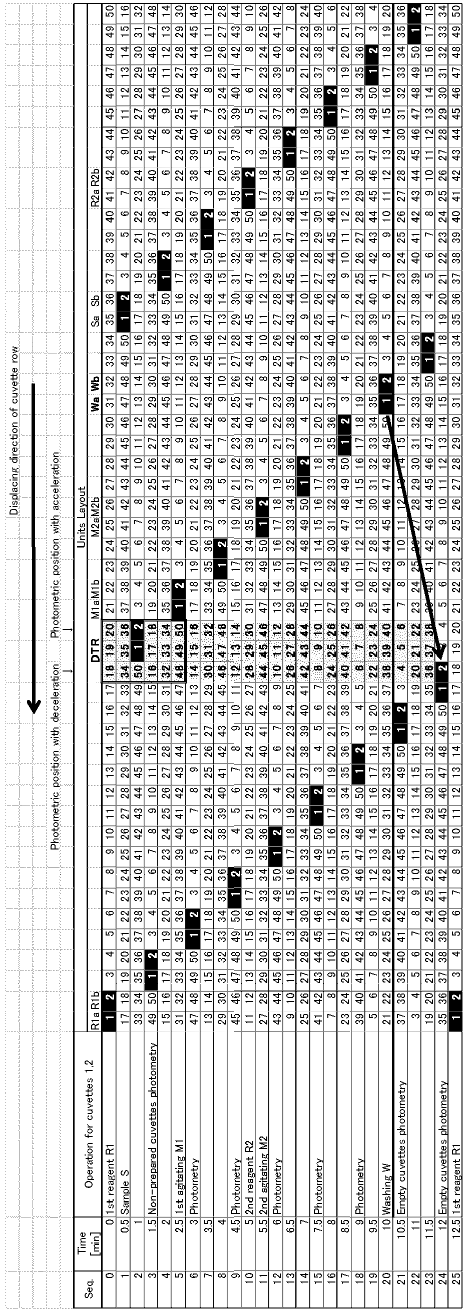

Fig. 12 illustrates the initial layout of the row of cuvettes 2 before the cuvette table 3 rotates intermittently. In the resting state of the initial layout (zeroth sequence), the first reagent R1 may be dispensed into the cuvettes of interest at the first reagent dispensing position 62p by the first reagent dispensing parts 62 (R1a, R1b).

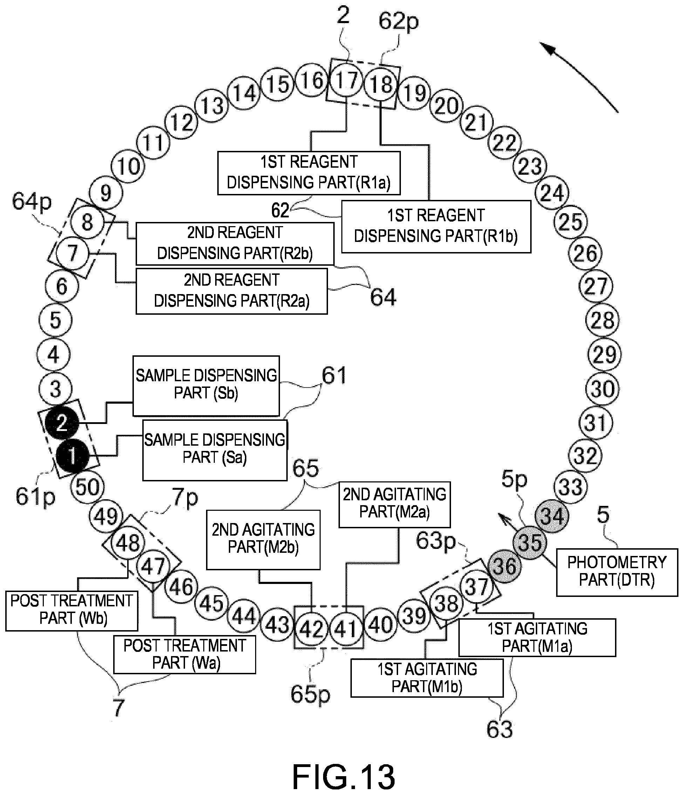

Fig. 13 illustrates the layout of the row of cuvettes 2 after the cuvette table 3 has operated for one sequence (moved by 16 cuvettes). After the first sequence operation, the sample S may be dispensed into the cuvettes of interest at the sample dispensing position 61p by the sample dispensing parts 61 (Sa, Sb).

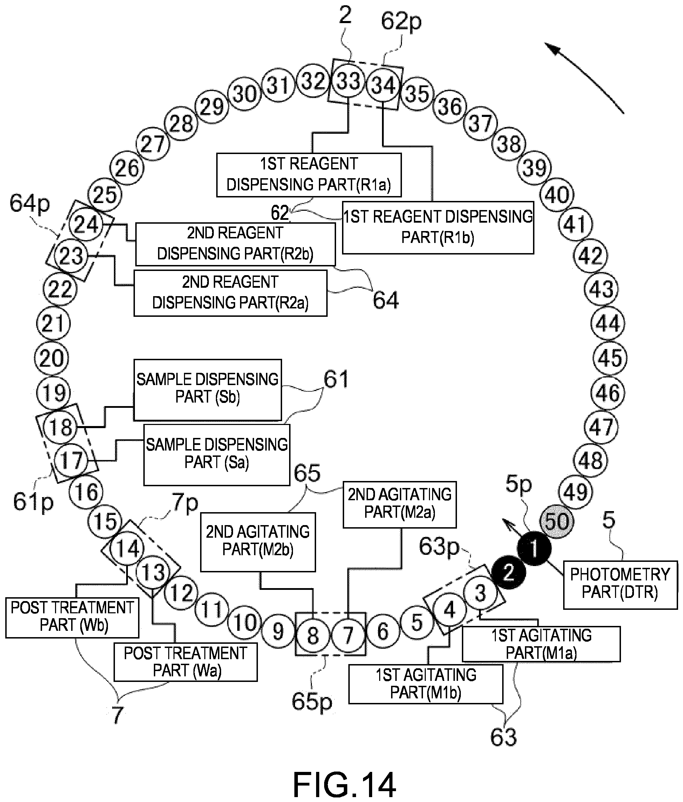

Fig. 14 illustrates the layout of the row of cuvettes 2 after the cuvette table 3 has operated for two sequences (moved by 32 cuvettes).

After this sequence operation, although the sample S and the first reagent have been dispensed into both the first and second cuvettes which are the cuvettes of interest, the cuvettes may have not yet been located at the first agitating position 63p, and therefore, they may have not yet been agitated by the first agitating parts 63 (M1a, M1b). That is, the cuvettes of interest may be both non-prepared cuvettes which are not prepared for performing the first-step photometry.

The first cuvette may stand still at the photometric position 5p in the resting state. The second cuvette may pass through the photometric position 5p, while being accelerated, during the next sequence operation. That is, both the cuvettes of interest may stand still at any of the photometric position 5p, the position where the photometry is performed while the cuvette being decelerated, and the position where the photometry is performed while the cuvette being accelerated.

Thus, in this embodiment, until the preparation for performing the first-step photometry is completed, the controller 8 may intermittently rotate the cuvette table 3 so that the non-prepared cuvette which is not prepared for performing the first-step photometry stands still at any of the photometric position 5p, the position where the photometry is performed while the cuvette being decelerated, and the position where the photometry is performed while the cuvette being accelerated. The controller 8 may cause the cuvette to stand still at the photometric position 5p until the pretreatment of the cuvette is completed.

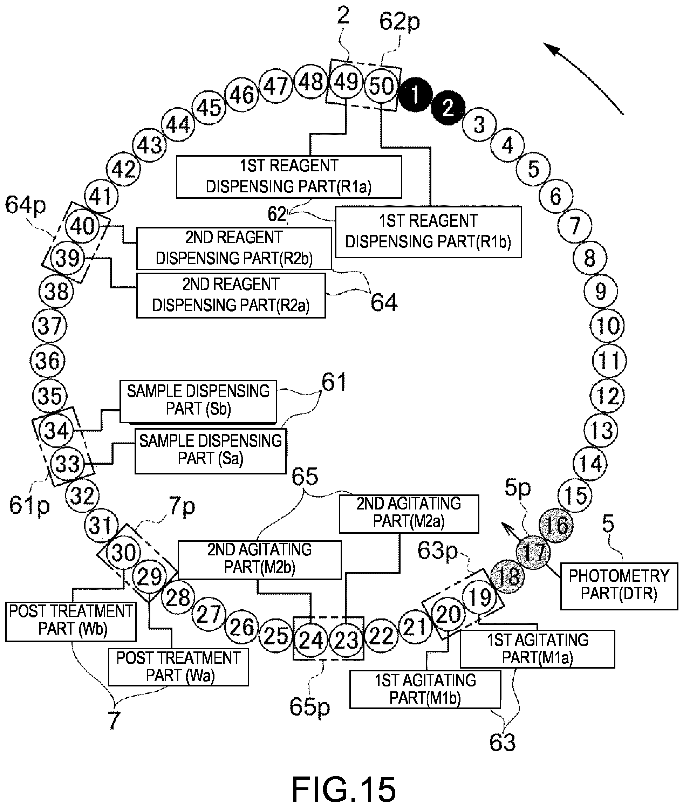

Fig. 15 illustrates the layout of the row of cuvettes 2 after the cuvette table 3 has operated for three sequences (moved by 48 cuvettes).

As for the second cuvette which is the cuvette of interest, the photometry data D1 may have been acquired by the photometry part 5 (DTR) as the cuvette passes through the photometric position 5p while being accelerated. The photometry data D1 for the second cuvette may be influenced by the inertia caused during the acceleration of the cuvette table 3.

However, as illustrated in Table 2, this second cuvette may be a non-prepared cuvette for which the pretreatment for the first-step photometry has not been completed. Therefore, the photometry data acquired for the second cuvette during this sequence operation may be photometry data which does not need to be used for the analysis by the analysis part 82 in the first place, and it can be excluded from the analysis.

Fig. 165 illustrates the layout of the row of cuvettes 2 after the cuvette table 3 has operated for five sequences (moved by 80 cuvettes).

After the fifth sequence operation, the first reagent R1 and the sample S in the cuvettes of interest may be agitated to prepare the first-step reaction liquid by the first agitating parts 63 (M1a, M1b) at the first agitating position 63p. Thus, as for the cuvettes of interest, the pretreatment for the first-step photometry may be completed. As for the cuvettes of interest, the photometry (first-step photometry) may be performed as the cuvettes pass through the photometric position 5p during the subsequent sequence operations.

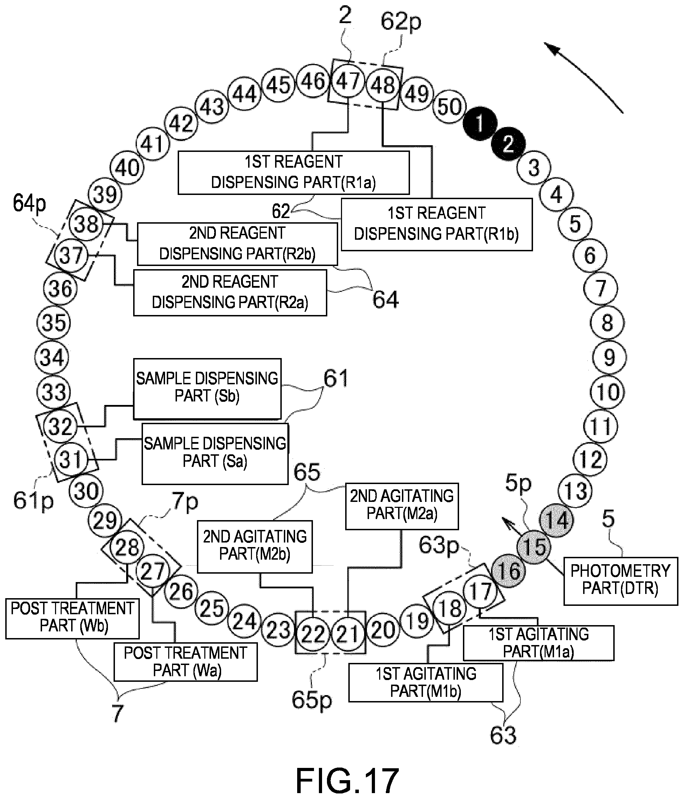

Fig. 17 illustrates the layout of the row of cuvettes 2 after the cuvette table 3 has operated for six sequences (moved by 96 cuvettes).

As for the cuvettes of interest, the photometry data D1 may have been acquired by the photometry part 5 (DTR), as the cuvettes pass through the photometric position 5p at the fixed speed. As for the cuvettes of interest, the pretreatment for the first-step photometry may have been completed. Therefore, the photometry data D1 of the cuvettes of interest acquired during this sequence operation may be photometry data which is not influenced by the inertia caused during the acceleration or the deceleration of the cuvette table 3.

After that, as illustrated in Table 2, the sequence in which the cuvette table 3 rotates intermittently may be repeated, and during the 9th sequence operation, the first-step photometry may be performed to the cuvettes of interest to acquire the photometry data D1. The photometry data D1 of the cuvettes of interest acquired by this sequence may also be photometry data which is not influenced by the inertia caused during the acceleration or the deceleration of the cuvette table 3.

Further, as illustrated in Table 2, similar to the first embodiment, the sequence in which the cuvette table 3 rotates intermittently may be repeated, and the pretreatment for the second-step photometry may be completed to the cuvettes of interest, and the second-step photometry may be performed to the cuvettes of interest to acquire the photometry data D1.

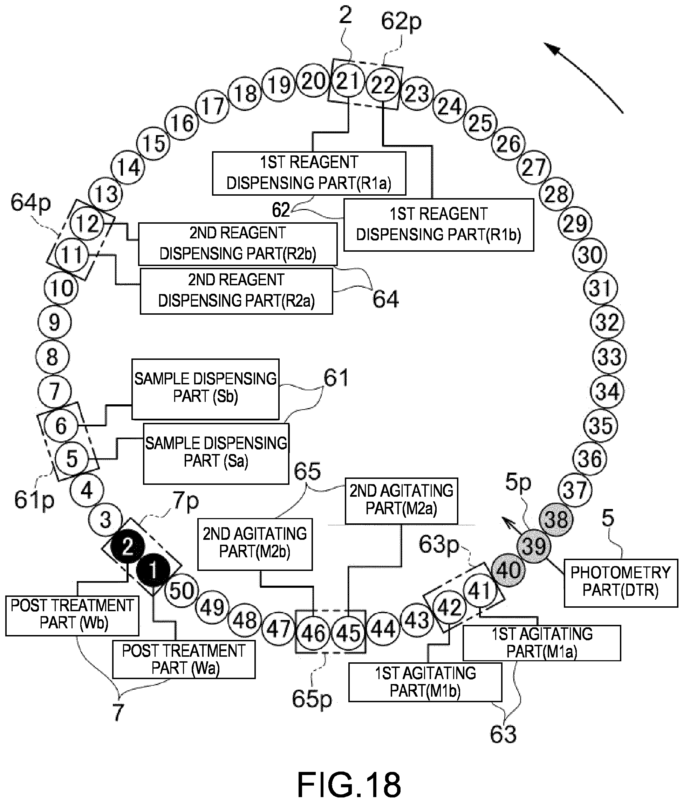

Fig. 18 illustrates the layout of the row of cuvettes 2 after the cuvette table 3 has operated for 20 sequences (moved by 320 cuvettes). After the 20th sequence operation, as for the cuvettes of interest, the reaction liquid (the second-step reaction liquid) may be discharged and the cuvettes may be washed with given cleaning fluid at the post treatment position 7p by the cuvette washing parts 7 (Wa, Wb).

As illustrated in Table 2, the cuvettes of interest may not stand still at any of the photometric position 5p, the position where the photometry is performed while the cuvette being decelerated, and the position where the photometry is performed while the cuvette being accelerated, until after the 20th sequence operation when the post treatment is completed after the fifth sequence operation when the pretreatment is completed. That is, after the fifth sequence operation when the pretreatment is completed, the cuvettes of interest may pass through the photometric position 5p at the fixed rotational speed, each time the cuvettes pass through the photometric position 5p, in the rotating state until the cuvettes of interest which stood still at the pretreatment position 6p stand still at the post treatment position 7p after the completion of the pretreatment.

Further, as illustrated in Table 2, after the fifth sequence operation when the pretreatment is completed, both the first and second cuvettes which are the cuvettes of interest may pass through the photometric position 5p at the fixed speed, when the cuvette table 3 is in the rotating state, until after the 20th sequence operation when the post treatment is completed. The first cuvette and the second cuvette may stand still at the post treatment position 7p after the 20th sequence operation. Thus, in the rotating state until the first and second cuvettes which stood still at the pretreatment position 6p stand still at the first post treatment position and the second post treatment position after the completion of the pretreatment, respectively, both the first cuvette and the second cuvette may pass through the photometric position 5p at the fixed rotational speed, each time the cuvettes pass through the photometric position 5p substantially simultaneously (i.e., both the cuvettes may pass through the photometric position 5p at the fixed rotational speed during the same sequence). Note that the first post treatment position and the second post treatment position may correspond to the positions of the cuvettes 2 for which the processing is performed by the two sets of processing units (i.e., the post treatment part Wa and the post treatment part Wb) among the post treatment positions 7p for the two cuvettes which are surrounded by the box in Fig. 18, respectively.

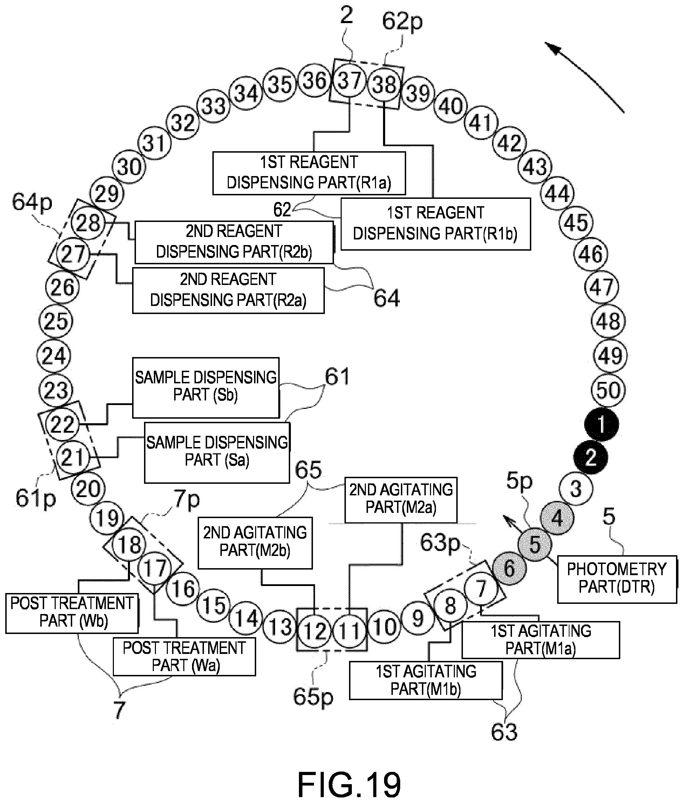

Fig. 19 illustrates the layout of the row of cuvettes 2 after the cuvette table 3 has operated for 21 sequences (moved by 336 cuvettes).

As for both the first and second cuvettes which are the cuvettes of interest, the photometry data D1 may have been acquired by the photometry part 5 (DTR) as the cuvettes pass through the photometric position 5p at the fixed speed. However, as for these two cuvettes of interest, the post treatment may have already been performed after the previous 20th sequence operation, and they may be cuvettes without the necessity of the photometry in the first place. Further, as for these two cuvettes of interest, the first-step photometry and the second-step photometry may have already been completed in the state where they are not influenced by the inertia caused during the acceleration or the deceleration of the cuvette table 3. Therefore, the photometry data acquired for the cuvettes of interest during this sequence operation may be photometry data which does not need to be used for the analysis by the analysis part 82 in the first place, and it can be excluded from the analysis.

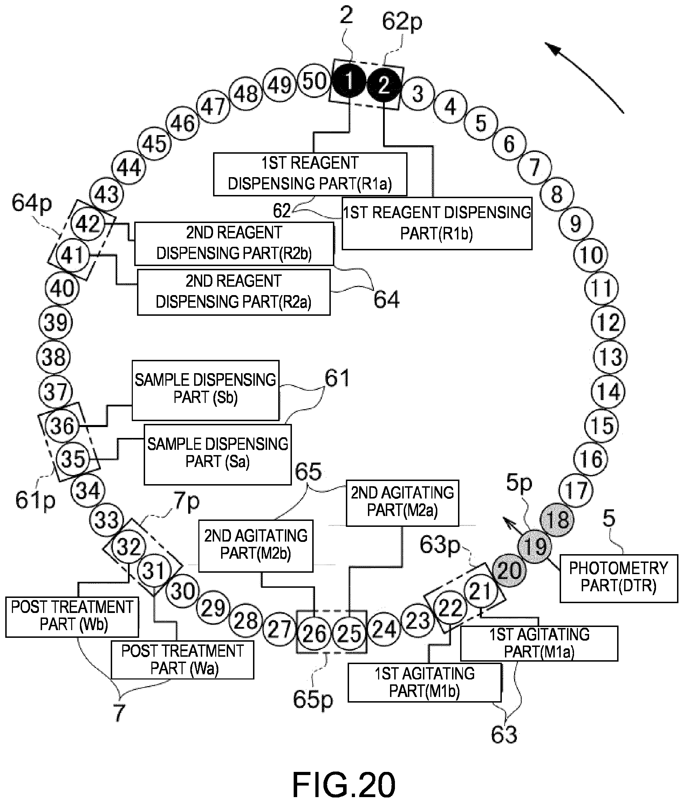

Fig. 20 illustrates the layout of the row of cuvettes 2 after the cuvette table 3 has operated for 25 sequences (moved by 400 cuvettes). For the analysis of new sample S, the first reagent R1 may be dispensed into the cuvettes of interest at the first reagent dispensing position 62p by the first reagent dispensing parts 62 (R1a, R1b).

As described above, as illustrated in Table 2, in this embodiment, the pretreatment for the first-step photometry may be completed after the fifth sequence operation. In this embodiment, the controller 8 may intermittently rotate the cuvette table 3 so that the non-prepared cuvette which is not prepared for performing the first-step photometry stands still at any of the photometric position 5p, the position where the photometry is performed while the cuvette being decelerated, and the position where the photometry is performed while the cuvette being accelerated, until the preparation for performing the first-step photometry is completed. The controller 8 may cause the cuvette to stand still at the photometric position 5p until the pretreatment of the cuvette is completed. The photometry position 5p, the pretreatment positions 6p (the sample dispensing position 61p, the first reagent dispensing position 62p, the first agitating position 63p, the second reagent dispensing position 64p, and the second agitating position 65p), and the post treatment position 7p on the analyzer 1 may also be disposed so as to realize the above configuration.

Further, in this embodiment, the cuvette 2 which stood still at the post treatment position 7p after the previous sequence operation may stand still at the photometric position 5p after a plurality of sequence operations. That is, the controller 8 may cause the cuvette which stood still at the post treatment position 7p to stand still at the photometric position 5p after at least one intermittent rotating operation. As illustrated in Table 2, in this embodiment, the cuvette of interest (the second cuvette) which stands still at the position where the photometry is performed while the cuvette being decelerated after the 24th sequence operation may be located at the post treatment position 7p after the 20th sequence operation.

As described above, according to the analyzer 1 according to the second embodiment of the present disclosure, the plurality of samples S can be automatically analyzed, while reducing the adverse effect to the photometry due to the inertia caused during the acceleration or the deceleration of the cuvette table 3. The photometry data excluded from the analysis may be photometry data of the cuvette without the necessity of the photometry in the first place, and the accuracy of the analytical value calculated based on the photometry data will not fall.

### [Other Embodiments]

Although the present disclosure is described above by using the specific embodiments, the present disclosure is not limited to the above embodiments.

Although in the above embodiment the post treatment part 7 is the cuvette washing part, the post treatment part 7 may be a cuvette disposal part which disposes the cuvette 2 which stands still at the post treatment position 7p on the analyzer 1 (performs disposal processing).

Although in the above embodiments the pretreatment part 6 and the post treatment part 7 are each provided with the two sets of processing units, each of the pretreatment part 6 and the post treatment part 7 may be comprised of a single processing unit, or may be comprised of three or more processing units.

Although in the above embodiments the components in the sample are analyzed using the two kinds of reagents to the same sample, the components to be analyzed are not limited to two kinds. For example, in the above embodiments, the analysis may be performed only using the first reagent R1 without using the second reagent R2 (i.e., the component in the sample may be analyzed using one kind of reagent). Further, the components in the sample may be analyzed using three or more kinds of reagents to the same sample.

Although in the above embodiment the controller 8 is provided to the analyzer 1, the controller 8 does not need to be directly provided to the analyzer 1, and it may be configured as a controller on a cloud network, which is connected to the analyzer 1. The phrase "the controller 8 is provided to the analyzer 1" may mean both a mode in which the controller 8 is provided directly to the analyzer 1 and a mode in which the controller 8 on the cloud network is provided.

### DESCRIPTION OF REFERENCE CHARACTERS

- 1: Analyzer
- 2: Cuvette
- 3: Cuvette Table
- 4: Actuator
- 5: Photometry Part (DTR)
- 5p: Photometric Position
- 6: Pretreatment Part
- 6p: Pretreatment Position
- 7: Post Treatment Part (Wa, Wb)
- 7p: Post Treatment Position
- 8: Controller
- 9: Display Unit
- 11: Sample Storage
- 12: First Reagent Storage
- 13: Second Reagent Storage
- 21: Sample Storage Actuator
- 22: First Reagent Storage Actuator
- 23: Second Reagent Storage Actuator
- 41: Drive Gear
- 42: Driven Gear
- 43: Stepping Motor
- 51: Light Source
- 52: Photo Detector
- 61: Sample Dispensing Part (Sa, Sb)
- 61p: Sample Dispensing Position
- 62: First Reagent Dispensing Part (R1a, R1b)
- 62p: First Reagent Dispensing Position
- 63: First Agitating Part (M1a, M1b)
- 63p: First Agitating Position
- 64: Second Reagent Dispensing Part (R2a, R2b)
- 64p: Second Reagent Dispensing Position
- 65: Second Agitating Part (M2a, M2b)
- 65p: Second Agitating Position
- 81: Memory
- 82: Analysis Part
- D1: Photometry Data
- R1: First Reagent
- R2: Second Reagent
- S: Sample
- P: Program

## Claims

1. An analyzer, comprising:
a cuvette table where a plurality of cuvettes are disposed annularly;
an actuator configured to drive the cuvette table so that the cuvette table performs intermittent rotation in which a resting state and a rotating state are repeatedly alternated, and each time the cuvette table rotates intermittently, a row of the plurality of cuvettes is displaced in the annular direction by a given number of cuvettes;
a pretreatment part configured to perform pretreatment to a cuvette among the plurality of cuvettes that stands still at a pretreatment position in the resting state;
a post treatment part configured to perform post treatment to a cuvette among the plurality of cuvettes that stands still at a post treatment position in the resting state;
a photometry part configured to perform photometry to a cuvette that passes through a photometric position in the rotating state; and
a controller configured, in the rotating state until the cuvette that stood still at the pretreatment position stands still at the post treatment position after the completion of the pretreatment, to control the actuator so that the cuvette passes through the photometric position at a fixed rotational speed, each time the cuvette passes through the photometric position.

2. The analyzer of claim 1, wherein the pretreatment part includes an agitating part, and the pretreatment is agitating processing in which reaction liquid in the cuvette is agitated, and
wherein the pretreatment position is an agitating position where the agitating processing is performed.

3. The analyzer of claim 1, wherein the pretreatment part includes a dispensing part, and the pretreatment is dispensing processing in which sample or reagent is dispensed into the cuvette, and
wherein the pretreatment position is a dispensing position where the dispensing processing is performed.

4. The analyzer of any one of claims 1 to 3, wherein the post treatment part includes a cuvette washing part, and the post treatment is washing processing in which the cuvette is washed, and
wherein the post treatment position is a washing position where the washing processing is performed.

5. The analyzer of any one of claims 1 to 3, wherein the post treatment part includes a cuvette disposal part, and the post treatment is disposal processing in which the cuvette is discarded, and
wherein the post treatment position is a disposal position where the disposal processing is performed.

6. The analyzer of any one of claims 1 to 5, wherein, in the rotating state where the cuvette passes through the photometric position at the fixed rotational speed, a specific number of cuvettes adjacent to each other forward and backward in the annular direction including the cuvette pass through the photometric position at the fixed rotational speed, and
wherein the specific number of cuvettes is a number obtained by subtracting the number of cuvettes that stand still at the photometric position in the resting state, and the number of cuvettes that pass through the photometric position during acceleration or deceleration of the rotation of the cuvette table in the rotating state, from the given number of cuvettes.

7. The analyzer of any one of claims 1 to 6, wherein,
the pretreatment part includes:
a first pretreatment part configured to perform the pretreatment to a first cuvette that stands still at a first pretreatment position included in the pretreatment position; and
a second pretreatment part configured to perform the pretreatment to a second cuvette that stands still at a second pretreatment position included in the pretreatment position, and
wherein the post treatment part includes:
a first post treatment part configured to perform the post treatment to the first cuvette that stands still at a first post treatment position included in the post treatment position; and
a second post treatment part configured to perform the post treatment to the second cuvette that stands still at a second post treatment position included in the post treatment position.

8. The analyzer of claim 7, wherein, in the rotating state until the first cuvette and the second cuvette that stood still at the pretreatment position stand still at the first post treatment position and the second post treatment position, respectively, after the completion of the pretreatment, the controller controls the actuator so that both the first cuvette and the second cuvette pass through the photometric position at the fixed rotational speed, each time the first and second cuvettes pass through the photometric position substantially simultaneously.

9. The analyzer of any one of claims 1 to 6, wherein the controller causes the cuvette to stand still at the photometric position until the pretreatment of the cuvette is completed.

10. The analyzer of any one of claims 1 to 6, wherein the controller causes the cuvette, that stood still at the post treatment position, to stand still at the photometric position after at least one intermittent rotating operation.

11. An analyzing method of performing a control comprising the steps of:
driving a cuvette table where a plurality of cuvettes are disposed annularly so that the cuvette table performs intermittent rotation in which a resting state and a rotating state are repeatedly alternated, and each time the cuvette table rotates intermittently, a row of the plurality of cuvettes is displaced in the annular direction by a given number of cuvettes;
performing pretreatment to a cuvette among the plurality of cuvettes that stands still at a pretreatment position in the resting state;
performing post treatment to a cuvette among the plurality of cuvettes that stands still at a post treatment position in the resting state;
performing photometry to a cuvette that passes through a photometric position in the rotating state; and
in the rotating state until the cuvette that stood still at the pretreatment position stands still at the post treatment position after the completion of the pretreatment, causing the cuvette to pass through the photometric position at a fixed rotational speed, each time the cuvette passes through the photometric position.

12. The analyzing method of claim 11, wherein the pretreatment is agitating processing in which reaction liquid in the cuvette is agitated, and
wherein the pretreatment position is an agitating position where the agitating processing is performed.

13. The analyzing method of claim 11, wherein the pretreatment is dispensing processing in which sample or reagent is dispensed into the cuvette, and
wherein the pretreatment position is a dispensing position where the dispensing processing is performed.

14. The analyzing method of any one of claims 11 to 13, wherein the post treatment is washing processing in which the cuvette is washed, and
wherein the post treatment position is a washing position where the washing processing is performed.

15. The analyzing method of any one of claims 11 to 13, wherein the post treatment is disposal processing in which the cuvette is discarded, and
wherein the post treatment position is a disposal position where the disposal processing is performed.

16. The analyzing method of any one of claims 11 to 15, wherein, in the rotating state where the cuvette passes through the photometric position at the fixed rotational speed, a specific number of cuvettes adjacent to each other forward and backward in the annular direction including the cuvette pass through the photometric position at the fixed rotational speed, and
wherein the specific number of cuvettes is a number obtained by subtracting the number of cuvettes that stand still at the photometric position in the resting state, and the number of cuvettes that pass through the photometric position during acceleration or deceleration of the rotation of the cuvette table in the rotating state, from the given number of cuvettes.

17. A program for causing a computer to realize a control function comprising:
driving a cuvette table where a plurality of cuvettes are disposed annularly so that the cuvette table performs intermittent rotation in which a resting state and a rotating state are repeatedly alternated, and each time the cuvette table rotates intermittently, a row of the plurality of cuvettes is displaced in the annular direction by a given number of cuvettes;
performing pretreatment to a cuvette among the plurality of cuvettes that stands still at a pretreatment position in the resting state;
performing post treatment to a cuvette among the plurality of cuvettes that stands still at a post treatment position in the resting state;
performing photometry to a cuvette that passes through a photometric position in the rotating state; and
in the rotating state until the cuvette that stood still at the pretreatment position stands still at the post treatment position after the completion of the pretreatment, causing the cuvette to pass through the photometric position at a fixed rotational speed, each time the cuvette passes through the photometric position.
